# EUROPEAN PATENT APPLICATION

(11) **EP 4 439 699 A1**
(43) Date of publication of application: **02.10.2024**
(21) Application number: 24165835.0
(22) Date of filing: 25.03.2024
(51) Int. Cl.: H01M 4/131, H01M 4/36, H01M 4/62, H01M 10/0525, H01M 4/505, H01M 4/525, H01M 4/02

(54) **DRY ELECTRODE FILM, AND DRY ELECTRODE AND LITHIUM BATTERY INCLUDING THE SAME**

(30) Priority: 26.03.2023 KR 20230039348; 03.05.2023 KR 20230057762
(71) Applicant: Samsung SDI Co., Ltd., Yongin-si, Gyeonggi-do 17084 (KR)
(72) Inventor: KWON, Ilkyong, 17084 Yongin-si (KR); LEE, Jinhyon, 17084 Yongin-si (KR); PYUN, Ahram, 17084 Yongin-si (KR); KWON, Seunguk, Yongin-si (KR); BANG, Youmin, 17084 Yongin-si (KR)
(74) Representative: Marks & Clerk LLP

(57) **Abstract**

A dry electrode film, and a dry electrode and a lithium battery that include the same are provided. The dry electrode film includes a dry electrode active material and a dry binder, wherein the dry electrode active material includes a core and a shell conforming to a surface of the core, the shell includes at least one element selected from among beryllium (Be), boron (B), and fluorine (F), and in an X-ray photoelectron spectroscopy (XPS) spectrum of a surface of the dry electrode active material, a content (e.g., amount) of the at least one element of is about 1 wt% to about 4 wt%.

## Description

### BACKGROUND

### 1. Field

One or more embodiments relate to a dry electrode film, and a dry electrode and a lithium battery that include the same.

### 2. Description of the Related Art

As the desire for miniaturization and higher performance of electronic, electrical, and/or other suitable devices increases, it has become important for lithium batteries to have higher energy density as well as a smaller size and reduced weight. In this regard, lithium batteries having high capacity have become increasingly important.

An electrode manufactured from a slurry containing a solvent involves the use of a large quantity of the solvent in a process of manufacturing the electrode, and thus a dry method that excludes such a solvent, such as excludes use of an organic solvent, is being investigated or is desired.

### SUMMARY

Aspects of one or more embodiments of the present disclosure are directed toward a dry electrode film having an improved high-temperature cycling performance by including a dry electrode active material containing an element of Period 2 of the Periodic Table of the Elements on a surface thereof.

Aspects of one or more embodiments of the present disclosure are directed toward a dry electrode including the dry electrode film.

Aspects of one or more embodiments of the present disclosure are directed toward a lithium battery including the dry electrode.

Additional aspects will be set forth in part in the description which follows and, in part, will be apparent from the description, or may be learned by practice of the presented embodiments of the present disclosure.

According to one or more embodiments of the present disclosure, a dry electrode film includes a dry electrode active material and a dry binder, wherein the dry electrode active material includes a core and a shell conforming to (*e.g*., on) a surface of the core, the shell includes an element of Period 2 of the Periodic Table of the Elements of (*e.g*., at least one element selected from among) beryllium (Be), boron (B), and/or fluorine (F), and in an X-ray photoelectron spectroscopy (XPS) spectrum of a surface of the dry electrode active material, a content (*e.g*., amount) of the element of Period 2 of the Periodic Table of the Elements is about 1 wt% to about 4 wt%.

According to one or more embodiments of the present disclosure, a dry electrode includes an electrode current collector, and the dry electrode film disposed on one side or both sides (*e.g*., opposite sides) of the electrode current collector.

According to one or more embodiments of the present disclosure, a lithium battery includes a first electrode, a second electrode, and an electrolyte disposed between the first electrode and the second electrode, wherein the first electrode, the second electrode, or a combination thereof includes the dry electrode described above.

At least some of the above and other features of the invention are set out in the claims.

### BRIEF DESCRIPTION OF THE DRAWINGS

The above and other aspects, features, and/or principles of certain embodiments of the present disclosure will be more apparent from the following description taken in conjunction with the accompanying drawings, in which:
FIG. 1A is a cross-sectional schematic diagram of a dry composite electrode active material according to one or more embodiments of the present disclosure;
FIG. 1B is a cross-sectional schematic diagram of a dry composite electrode active material according to one or more embodiments of the present disclosure;
FIG. 2A is a scanning electron microscope image of a surface of a composite cathode active material included in a dry cathode film prepared in Example 1;
FIG. 2B is an scanning electron microscope - energy dispersive spectroscopy (SEM-EDS) mapping image of FIG. 2A;
FIG. 3A is a scanning electron microscope image of a surface of a composite cathode active material included in a dry cathode film prepared in Comparative Example 1;
FIG. 3B is an SEM-EDS mapping image of FIG. 3A;
FIG. 4 is a graph showing the result of high-temperature lifespan characterization of lithium batteries prepared in Example 1 and Comparative Example 1;
FIG. 5 is a schematic diagram of a lithium battery according to one or more embodiments of the present disclosure;
FIG. 6 is a schematic diagram of a lithium battery according to one or more embodiments of the present disclosure; and
FIG. 7 is a schematic diagram of a lithium battery according to one or more embodiments of the present disclosure.

### DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the scope of the present disclosure.

Reference will now be made in more detail to embodiments, examples of which are illustrated in the accompanying drawings, wherein like reference numerals refer to like elements throughout, and duplicative descriptions thereof may not be provided. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

As used herein, the term "and/or" includes any and all combinations of one or more of the associated listed items. Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from a, b, and c," "at least one from among a, b, and c," "one from among a, b, and c", "at least one of a to c" indicates only a, only b, only c, both a and b, both a and c, both b and c, all of a, b, and c, or variations thereof.

It will be understood that when an element or layer is referred to as being "on," "connected to," "coupled to," and "over" another element or layer, it can be directly on, connected to, coupled to or over the other element or layer, or one or more intervening elements or layers may be present. In contrast, when an element is referred to as being "directly on," "directly connected to," "directly coupled to," or "directly over" another element, there are no intervening elements present. In addition, it will also be understood that when an element or layer is referred to as being "between" two elements or layers, it can be the only element or layer between the two elements or layers, or one or more intervening elements or layers may also be present.

It will be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. For example, a first element, component, region, layer, or section could be termed a second element, component, region, layer, or section, without departing from the teachings of the present disclosure.

The terminology used herein is for the purpose of describing particular embodiments only and is not intended to be limiting of the present disclosure. As used herein, the singular forms "a," "an" and "the" are intended to include the plural forms as well including "at least one," unless the context clearly indicates otherwise. The term "at least one" should not be interpreted as being limited to a singular form. It will be further understood that the terms "comprises," "comprising," "includes," and/or "including" when used in this specification, specify the presence of the stated features, regions, integers, steps, operations, elements, and/or components, but do not preclude the presence or addition of one or more other features, regions, integers, steps, operations, elements, components, and/or groups thereof.

Furthermore, spatially relative terms, such as "lower," "bottom," or "below" and "upper," "top," or "above" may be used herein to conveniently describe one element or feature's relationship to another element or feature. It will be understood that spatially relative terms are intended to encompass different orientations of the device while the device is in use or operated, in addition to the orientation depicted in the drawings. For example, if the device in one of the drawings is turned over, elements described as being on the "lower" or "bottom" side of other elements would then be oriented on "upper" or "top" sides of the other elements. Therefore, the example term "lower" can therefore, encompass both an orientation of "lower" and "upper." The device may be placed in other orientations (may be rotated by 90 degrees or in a different direction), and spatially relative terms used herein should be interpreted accordingly.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the specification and/or the relevant art, and should not be interpreted in an idealized or overly formal sense, unless expressly so defined herein.

Embodiments are described herein with reference to cross sectional illustrations that are schematic illustrations of embodiments. As such, variations from the illustrated shapes as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, angles that are illustrated as being sharp may be rounded. Thus, the regions illustrated in the drawings are schematic in nature and their shapes are not intended to illustrate the precise shape of a region and are not intended to limit the scope of the present claims.

"Group" refers to a group in the Periodic Table of the Elements of the Elements according to the 1-18 Group numbering system by the International Union of Pure and Applied Chemistry ("IUPAC").

The term "particle diameter" or "particle size" as used herein refers to an average particle diameter if the particle is spherical, and refers to an average major axis length if the particle is non-spherical. The particle diameter may be measured utilizing a particle size analyzer (PSA). The term "particle diameter" or "particle size" refers to an average particle diameter, for example. The term "average particle diameter" refers to, for example, a median particle diameter (D50).

In the present disclosure, when particles are spherical, "diameter" indicates the particle diameter or an average particle diameter, and when the particles are non-spherical, the "diameter" indicates a major axis length or an average major axis length. The diameter (or size) of the particles may be measured utilizing a scanning electron microscope or a particle size analyzer. As the particle size analyzer, for example, HORIBA, LA-950 laser particle size analyzer, may be utilized. When the size of the particles is measured utilizing a particle size analyzer, the average particle diameter (or size) is referred to as D50.

D50 may refer to the average diameter (or size) of particles whose cumulative volume corresponds to 50 vol% in the particle size distribution (*e.g*., cumulative distribution), and refers to the value of the particle size corresponding to 50% from the smallest particle when the total number of particles is 100% in the distribution curve accumulated in the order of the smallest particle size to the largest particle size as measured by a laser diffraction method.

D90 may refer to the average diameter (or size) of particles whose cumulative volume corresponds to 90 vol% in the particle size distribution (*e.g*., cumulative distribution), and refers to the value of the particle size corresponding to 90% from the smallest particle when the total number of particles is 100% in the distribution curve accumulated in the order of the smallest particle size to the largest particle size as measured by a laser diffraction method.

D10 may refer to the average diameter (or size) of particles whose cumulative volume corresponds to 10 vol% in the particle size distribution (*e.g*., cumulative distribution), and refers to the value of the particle size corresponding to 10% from the smallest particle when the total number of particles is 100% in the distribution curve accumulated in the order of the smallest particle size to the largest particle size as measured by a laser diffraction method.

As used herein, the term "metal" refers to both metals and metalloids such as silicon and germanium, in an elemental or ionic state.

As used herein, the term "alloy" refers to a mixture of two or more metals.

The term "electrode active material," as used herein, refers to an electrode material capable of undergoing lithiation and delithiation.

As used herein, the term "cathode active material" refers to a cathode material capable of undergoing lithiation and delithiation.

As used herein, the term "anode active material" refers to an anode material capable of undergoing lithiation and delithiation.

As used herein, the terms "lithiation" and "to lithiate" refer to a process of adding lithium to an electrode active material.

As used herein, the terms "delithiation" and "to delithiate" refer to a process of removing lithium from an electrode active material.

As used herein, the terms "charging" and "to charge" refer to a process of providing electrochemical energy to a battery.

As used herein, the terms "discharging" and "to discharge" refer to a process of removing electrochemical energy from a battery.

As used herein, the terms "positive electrode" and "cathode" refer to an electrode at which electrochemical reduction and lithiation take place during a discharging process.

As used herein, the terms "negative electrode" and "anode" refer to an electrode at which electrochemical oxidation and delithiation take place during a discharging process.

While specific examples are described herein, there may be alternatives, modifications, variations, improvements, and substantial equivalents of the examples disclosed herein, including those that are presently unforeseen or unappreciated, which may be understood by applicants or those skilled in the art. Accordingly, the appended claims as filed and as they can be amended are intended to embrace all such alternatives, modifications, variations, improvements and substantial equivalents.

Hereinbelow, a dry electrode film according to one or more embodiments, and a dry electrode and a lithium battery including the same, will be described in greater detail.

A dry electrode film according to one or more embodiments includes: a dry electrode active material; and a dry binder, wherein the dry electrode active material includes: a core; and a shell conforming to (*e.g*., on) a surface of the core, the shell includes at least one element of Period 2 of the Periodic Table of the Elements of (*e.g*., at least one element selected from among) beryllium (Be), boron (B), and/or fluorine (F), and wherein a content (*e.g*., amount) of the at least one element of Period 2 of the Periodic Table of the Elements in an X-ray photoelectron spectroscopy (XPS) spectrum of a surface of the dry electrode active material is about 1 wt% to about 4 wt% based on a total weight of the elements measured (e.g., determined) from the XPS spectrum of a surface of the dry electrode active material. A content (e.g., amount) of the at least one element of Period 2 of the Periodic Table of the Elements in an X-ray photoelectron spectroscopy (XPS) spectrum of a surface of the dry electrode active material for example may be obtained by measuring the area under each peak and applying appropriate elemental sensitivity factors (from published tables, determined experimentally or theoretically; e.g., Seah et al., 2001; Wagner, 1983; Battistoni et al., 1985; Handbook of X-ray Photoelectron Spectroscopy). The content (e.g., amount) of the at least one element of Period 2 of the Periodic Table of the Elements in an X-ray photoelectron spectroscopy (XPS) spectrum of a surface of the dry electrode active material for example may be obtained by using an equation Cₐ=(Iₐ/Sₐ)/(∑Iᵢ/Sᵢ), wherein Cₐ is the content (e.g., amount) of the element of interest (i.e., at least one element of Period 2 of the Periodic Table of the Elements), Iₐ is the measured intensity of the element of interest, Sₐ is the elemental sensitivity factor the element of interest, Iᵢ is the measured intensity of the each element, Sᵢ is the elemental sensitivity factor of each element, and ∑Iᵢ/Sᵢ is the sum of the ratios of intensities divided by the sensitivity factors of all elements measured in the X-ray photoelectron spectroscopy (XPS) spectrum. The measured peak intensity corresponds to measured peak area. The measured peak area for example can be automatically calculated from the measured intensity by using software from the X-ray photoelectron spectroscopy (XPS) spectrum. Cₐ can be measured as an atomic percentage (e.g., at%) and the an atomic percentage (e.g., at%) can be converted into a weight percentage (e.g., wt%) or vice versa. The XPS spectrum for example may be measured by Quantum 2000 (Physical Electronics).

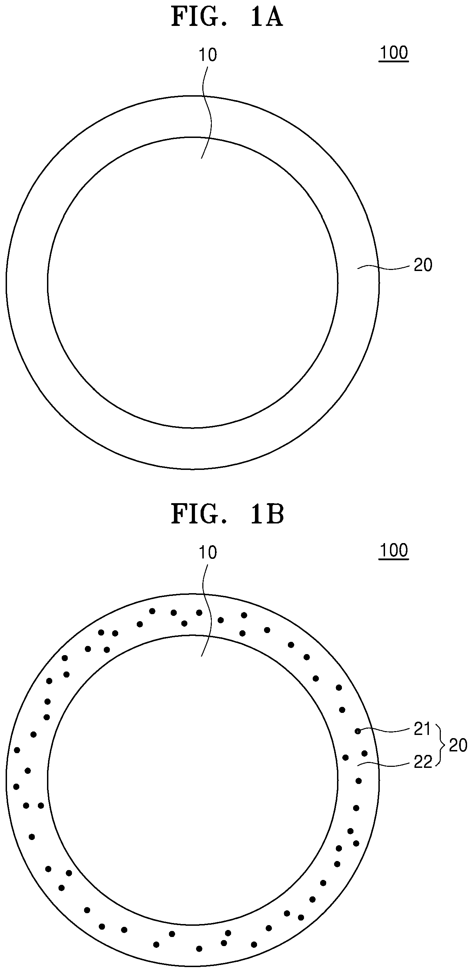

Referring to FIG. 1A, a dry electrode active material 100 includes a core 10 and a shell 20 disposed continuously or discontinuously along a surface of the core 10. The shell 20 may completely or partially cover the core 10. The shell 20 includes at least one element of Period 2 of the Periodic Table of the Elements of (*e.g*., at least one element selected from among) Be, B, and/or F. According to an XPS spectrum of a surface of the dry electrode active material 100, a content (*e.g*., amount) of the at least one element of Period 2 of the Periodic Table of the Elements is about 1 wt% to about 4 wt%, for example, about 1.5 wt% to about 4 wt%, or about 2 wt% to about 4 wt%. A dry electrode film may be a self-standing film.

The dry electrode active material may be, for example, an electrode active material that does not get impregnated, dissolved, or dispersed in a processing solvent during the manufacturing process of a dry electrode film. The dry electrode active material may be, for example, an electrode active material that does not contain processing solvent (*e.g*., to which a processing solvent was not added for proper processing) and does not come in contact with processing solvent during the manufacturing process of a dry electrode film. In present disclosure, "does not contain, free of, or not including a or any 'component'" "excluding a or any 'component'", "'component'-free", and/or the like refers to that the "component" not being added, selected or utilized as a component in the composition, but the "component" of less than a suitable amount may still be included due to other impurities and/or external factors.

With the dry electrode active material having the core/shell structure, and the shell including at least one element of Period 2 of the Periodic Table of the Elements of (*e.g*., at least one element selected from among) Be, B, and/or F, degradation of the dry electrode active material during charging and discharging may be prevented or reduced as side reactions due to the core and electrolyte are effectively prevented or reduced. As a result, a lithium battery including the dry electrode active material may have further improved cycling performance. In this regard, the lithium battery may have significantly improved high-temperature cycling performance.

As the content (*e.g*., amount) of the at least one element of Period 2 of the Periodic Table of the Elements of (*e.g*., at least one element selected from among) Be, B, and/or F is about 1 wt% to about 4 wt% according to an XPS spectrum of a surface of the dry electrode active material 100, side reactions between the core and the electrolyte may be inhibited or reduced more effectively. If (*e.g*., when) the content (*e.g*., amount) of the at least one element of Period 2 of the Periodic Table of the Elements of (*e.g*., at least one element selected from among) Be, B, and/or F is less than 1 wt%, it may be difficult to effectively prevent or reduce side reactions between the core and the electrolyte. If (*e.g*., when) the content (*e.g*., amount) of the at least one element of Period 2 of the Periodic Table of the Elements of (*e.g*., at least one element selected from among) Be, B, and/or F exceeds 4 wt%, battery capacity may decrease or high-temperature stability may deteriorate due to increased internal resistance, and thus, direct current-internal resistance (DC-IR) after high-temperature exposure may increase.

A dry electrode film may be, for example, a self-standing film. For example, the dry electrode film may retain a film form without a support. For example, the dry electrode film may be prepared as a separate self-standing film and disposed on an electrode current collector. For example, because the dry electrode film is prepared by a dry method, the dry electrode film may not contain any processing solvent deliberately added. For example, the dry electrode film may contain no residual processing solvent. There may be a trace amount of solvent incidentally remaining in the dry electrode film; however, this solvent is not considered as a processing solvent deliberately added. As such, the dry electrode film may be distinguished from a wet electrode film prepared through a wet process in which constituent components and a processing solvent are mixed together, followed by completely or partially removing the processing solvent through drying. In one or more embodiments, the dry electrode film may not be a self-standing film.

The dry electrode active material may have a core/shell structure, and the shell may include a coating layer. The coating layer may include, for example, Be, B, F, or any (suitable) combination thereof.

The dry electrode active material may include a core and a shell that is a coating layer coated on the core, wherein the coating layer may include Be, B, F, or any (suitable) combination thereof.

The coating layer may include, for example, a polymer. With the polymer included in the coating layer, the coating layer may more effectively accommodate volume changes of the core during charging and discharging.

The coating layer may include a polymer, and the polymer may contain Be, B, F, or any (suitable) combination thereof. As the coating layer may include a polymer containing Be, B, F, or any (suitable) combination thereof, the coating layer may more effectively accommodate volume changes of the core during charging and discharging, and side reactions of the core and the electrolyte may be more effectively inhibited or reduced.

The polymer containing F may be, for example, a fluoropolymer. The fluoropolymer may be a polymer of at least one fluorine-containing monomer of (*e.g*., selected from among) tetrafluoroethylene monomers, hexafluoropropylene monomers, chlorotrifluoroethylene monomers, vinylidene fluoride monomers, and/or perfluoroalkyl vinyl ether monomers. The fluoropolymer may be, for example, polytetrafluoroethylene (PTFE), a polyvinylidene fluoride-hexapropylene (PVDF-HFP) copolymer, or polyvinylidene fluoride (PVDF), but without being limited thereto, may be any (suitable) fluoropolymer available in the art. The fluoropolymer may be, for example, a PVDF binder. The fluoropolymer may have a weight average molecular weight of, for example, about 10,000 Dalton to about 1,000,000 Dalton, about 50,000 Dalton to about 1,000,000 Dalton, or about 100,000 Dalton to about 1,000,000 Dalton. With the fluoropolymer having a weight average molecular weight in the above ranges, the fluoropolymer may be more effectively coated on the core.

In one or more embodiments, the coating layer may include an inorganic compound, and the inorganic compound may include Be, B, F, or any (suitable) combination thereof. As the coating layer may include the inorganic compound, the coating layer may further improve in durability and inhibition or reduction of side reactions between the core and electrolytes may be more effective.

The inorganic compound may include, for example, a lithium-containing inorganic compound, a lithium-free inorganic compound, or any (suitable) combination thereof.

The lithium-containing inorganic compound may include, for example, LiF, Li₂B₄O₇, Li₂B₂O₇, Li₂B₈O₁₃, or any (suitable) combination thereof.

Examples of the lithium-free inorganic compound may include B₂O₃, B(OH)₃, BF₃, BeF₂, BeO, Be(OH)₂, CsF, KF, NaF, RbF, TiF, AgF, AgF₂, BaF₂, CaF₂, CuF₂, FeF₂, MnF₂, NiF₂, SnF₂, SrF₂, ZnF₂, AlF₃, BiF₃, CeF₃, CrF₃, DyF₃, EuF₃, GaF₃, GdF₃, FeF₃, HoF₃, InF₃, LaF₃, LuF₃, MnF₃, NdF₃, VOF₃, PrF₃, SbF₃, ScF₃, SmF₃, TbF₃, TiF₃, TmF₃, YF₃, YbF₃, TlF₃, CeF₄, GeF₄, SiF₄, SnF₄, TiF₄, VF₄, ZrF₄, NbF₅, SbF₅, TaF₅, BiF₅, MoF₆, ReF₆, SF₆, WF₆, or any (suitable) combination thereof.

In one or more embodiments, the dry electrode active material may have a core/shell structure, and the shell may include a doping layer. The doping layer may include, for example, Be, B, F, or any (suitable) combination thereof.

The doping layer may be formed by doping a doping element, such as Be, B, and/or F, on the surface of the core. By doping a doping element on the surface of the core, a portion of the core may transform into the shell. As the doping layer includes Be, B, F, or any (suitable) combination thereof, inhibition or reduction of side reactions between the core and electrolytes may be more effective.

The dry electrode active material may have a core/shell structure, wherein the shell may further include, in addition to the element(s) of Period 2 of the Periodic Table of the Elements described above, one or more elements of Period 2 of the Periodic Table of the Elements of (*e.g*., at least one element selected from among) C and/or N. With the shell further including one or more elements of Period 2 of the Periodic Table of the Elements of (*e*.*g*., at least one element selected from among) C and/or N, conductivity of the shell may improve, and inhibition or reduction of side reactions between the core and electrolytes may be more effective.

The dry electrode active material may have a core/shell structure, wherein the shell may further include a first carbon-based material. The first carbon-based material may be, for example, a crystalline carbon-based material. The first carbon-based material may be, for example, a carbon-based nanostructure. The first carbon-based material may be, for example, a carbon-based two-dimensional nanostructure. The first carbon-based material may include, for example, graphene, graphene oxide, reduced graphene oxide, or any (suitable) combination thereof. For example, as the shell including graphene and/or a matrix thereof has flexibility, volume changes of the dry electrode active material may be suitably accommodated (*e.g*., easily accommodated) during charging and discharging, such that crack formation inside the dry electrode active material may be inhibited or reduced. Due to high electronic conductivity of graphene, interfacial resistance between the dry electrode active material and electrolyte may decrease. Thus, despite the introduction of the shell including graphene, an increase in the internal resistance of the lithium battery may be inhibited or reduced. The first carbon-based material may further include, for example, Be, B, F, or any (suitable) combination thereof. The first carbon-based material may be doped with, for example, Be, B, F, or any (suitable) combination thereof. The first carbon-based material may further include, for example, N. The first carbon-based material may be further doped with N, for example. The content (*e.g*., amount) of Be, B, F, N, or any (suitable) combination thereof doped in the first carbon-based material may be 3 wt% or less, 2 wt% or less, 1 wt% or less, 0.5 wt% or less based on a total content (*e.g*., amount) of the first carbon-based material.

The dry electrode active material may include a core/shell structure, wherein the shell may further include at least one type or kind of first metal oxide and/or a first carbon-based material. The first metal oxide may be represented by formula MₐO_{b} (0<a≤3 and 0<b<4, wherein, if (*e.g*., when) a is 1, 2, or 3, b is not an integer) wherein M is at least one metal of (*e.g*., one metal selected from among) Groups 2 to 16 of the Periodic Table of the Elements. Referring to FIG. 1B, a dry electrode active material 100 includes a core 10 and a shell 20 disposed continuously or discontinuously along a surface of the core 10. The shell 20 may completely or partially cover the core 10. The shell 20 may further include a first metal oxide 21 and a first carbon-based material 22 in addition to at least one element of Period 2 of the Periodic Table of the Elements of (e.g., selected from among) Be, B, and/or F. The first metal oxide may be, for example, disposed within a matrix of the first carbon-based material described above. With the shell including the first metal oxide disposed in the matrix of the first carbon-based material, the shell may be more uniformly disposed on the core. For example, by being incorporated onto the core through a composite including the first metal oxide disposed in the matrix of the first carbon-based material, the shell may be more uniformly disposed on the core without agglomeration. As the shell uniformly disposed on the core effectively prevents or substantially prevents the core and electrolyte from coming into contact with each other, side reactions due to a contact between the core and the electrolyte may be prevented or reduced. Further, as cation mixing due to a contact between the core and the electrolyte is inhibited or reduced, resistance layers may be less likely to form on the surface of the core. Further, as the shell is provided on the core, elution of transition metal ions from the core including a transition metal may be inhibited or reduced.

For example, the shell may include a first metal oxide, and examples of a metal including the first metal oxide may be at least one of (*e.g*., one selected from among) Al, Nb, Mg, Sc, Ti, Zr, V, W, Mn, Fe, Co, Pd, Cu, Ag, Zn, Sb, and/or Se. The first metal oxide may be, for example, at least one of (*e.g*., one selected from among) Al₂O_{z} (0<z<3), NbOₓ (0<x<2.5), MgOₓ (0<x<1), Sc₂O_{z} (0<z<3), TiO_{y} (0<y<2), ZrO_{y} (0<y<2), V₂O_{z} (0<z<3), WO_{y} (0<y<2), MnO_{y} (0<y<2), Fe₂O_{z} (0<z<3), Co₃O_{w} (0<w<4), PdOₓ (0<x<1), CuOₓ (0<x<1), AgOₓ (0<x<1), ZnOₓ (0<x<1), Sb₂O_{z} (0<z<3), and/or SeO_{y} (0<y<2). As the first metal oxide is disposed inside the matrix of the first carbon-based material, substantial uniformity of the shell disposed on the core may improve, and high-voltage resistance of the dry electrode active material may further improve. For example, the shell may include Al₂Oₓ (0<x<3) as the first metal oxide. The shell may further include at least one second metal oxide. The second metal oxide may be represented by formula MₐO_{c} (0<a≤3 and 0<c≤4, wherein, if (*e.g*., when) a is 1, 2, or 3, c is an integer) wherein M is at least one metal of (*e.g*., one metal selected from among Groups 2 to 13, Group 15, and/or Group 16 of the Periodic Table of the Elements. For example, the second metal oxide may include the same metal as the first metal oxide. The ratio (c/a) of c to a in the second metal oxide may have a greater value than the ratio (b/a) of b to a in the at least one first metal oxide. For example, c/a>b/a may be satisfied. The second metal oxide may be, for example, disposed within the matrix of the first carbon-based material. The second metal oxide may be (*e.g*., may be selected, for example, from among) Al₂O₃, NbO, NbO₂, Nb₂O₅, MgO, Sc₂O₃, TiO₂, ZrO₂, V₂O₃, WO₂, MnO₂, Fe₂O₃, Co₃O₄, PdO, CuO, AgO, ZnO, Sb₂O₃, and/or SeO₂. The first metal oxide may be, for example, a reduction product of the second metal oxide. The first metal oxide may be obtained from a partial or complete reduction of the second metal oxide. In this regard, the first metal oxide may have a lower oxygen content (*e.g*., amount) and a lower oxidation number of the metal, relative to the second metal oxide. For example, the shell may include Al₂Oₓ (0<x<3) as the first metal oxide, and Al₂O₃ as the second metal oxide The shell may include, for example, at least one of (*e.g*., selected from among) the first metal oxide and/or the second metal oxide. The first metal oxide and/or the second metal oxide included in the shell may have a particle diameter of, for example, about 0.1 nm to about 100 nm, about 0.5 nm to about 100 nm, about 1 nm to about 100 nm, about 1 nm to about 50 nm, about 1 nm to about 30 nm, about 5 nm to about 30 nm, or about 10 nm to about 30 nm. With the first metal oxide and/or the second metal oxide having a particle diameter in the above nano-size ranges, the first metal oxide and/or the second metal oxide may be more uniformly distributed within the matrix of the first carbon-based material. If (*e.g*., when) the particle diameter of at least one of the first metal oxide and/or the second metal oxide excessively increases, the thickness of the shell increases, which may result in an increase in the internal resistance of a composite electrode active material. If (*e.g*., when) the particle diameter of at least one of the first metal oxide and/or the second metal oxide excessively decreases, substantially uniform dispersion may be difficult. The shell may include the first metal oxide and/or the second metal oxide and may include the first carbon-based material. The first carbon-based material may be disposed in a direction protruding from the surface of the first metal oxide and/or the second metal oxide. The first carbon-based material may be disposed in a direction protruding from the surface of the first metal oxide and/or the second metal oxide by directly growing from the surface of the first metal oxide and/or the second metal oxide. The first carbon-based material disposed in a direction protruding from the surface of the first metal oxide and/or the second metal oxide may be, for example, a two-dimensional carbon-based nanostructure, a carbon-based flake, and/or graphene.

The dry electrode active material may have a core/shell structure, and the shell may have a thickness of, for example, about 0.1 nm to about 5 µm, about 0.5 nm to about 5 µm, about 1 nm to about 5 µm, about 1 nm to about 1 µm, about 1 nm to about 500 nm, about 1 nm to about 200 nm, about 1 nm to about 100 nm, about 1 nm to about 50 nm, about 1 nm to about 30 nm, or about 1 nm to about 20 nm. A thickness of the shell for example may be measured by using SEM (scanning electron microscopy), TEM (transmission electron microscopy) or AFM (atomic force microscopy). With the shell having a thickness in the above ranges, a dry electrode including the dry electrode active material may have further improved electronic conductivity and further decreased internal resistance. The shell may have a monolayer structure or a multilayer structure. The multilayer structure may have, for example, a two-layer structure, a three-layer structure, or a four-layer structure. In the multilayer structure, the content (*e.g*., amount) and/or type or kind of the element of Period 2 of the Periodic Table of the Elements, *e*.*g*., Be, B, and F, included in each layer may vary from one layer to another.

For example, the content (*e.g*., amount) of the shell may be about 5 wt% or less, about 0.01 wt% to about 5 wt%, about 0.01 wt% to about 3 wt%, about 0.01 wt% to about 2 wt%, or about 0.01 wt% to about 1 wt%, with respect to the total weight of dry electrode active material. With the dry electrode active material including the shell in an amount in the above ranges, cycling performance of the lithium battery may further improve. If (*e.g*., when) the content (*e.g*., amount) of the shell is excessively low, it may be difficult to effectively inhibit or reduce side reactions between the core and the electrolyte. If (*e.g*., when) the content (*e.g*., amount) of the shell is excessively high, the shell may act as a resistant component such that the internal resistance of the lithium battery may increase.

For example, the dry electrode active material may further include a third metal doped on a core, or a third metal oxide coated on the core. Further, the shell may be disposed on the third metal doped on the core or on the third metal oxide coated on the core. For example, the shell may be disposed on the third metal and/or the third metal oxide, after the third metal is doped on the surface of a compound *e.g*., a lithium transition metal oxide included in the core, or after the third metal oxide is coated on the surface of a compound, *e.g*., a lithium transition metal oxide, included in the core. The dry electrode active material may include, for example: a core; an interlayer disposed on the core; and a shell disposed on the interlayer, wherein the interlayer may include a third metal or a third metal oxide. The third metal may be at least one metal of (*e.g*., one metal selected from among) Al, Zr, W, and/or Co, and the third metal oxide may be Al₂O₃, Li₂O-ZrO₂, WO₂, CoO, Co₂O₃, Co₃O₄, or any (suitable) combination thereof.

The dry electrode active material may have a core/shell structure, and the core may include, for example, a lithium transition metal oxide.

The core may include a compound of (*e.g*., selected from among) lithium transition metal oxides represented by Formulas 1 to 8:

Formula 1 LiₐNiₓCoyM_{z}O₂-_{b}A_{b}

In Formula 1, 1.0≤a≤1.2, 0≤b≤0.2, 0.8≤x<1, 0≤y≤0.2, 0<z≤0.2, x+y+z=1, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or any (suitable) combination thereof, and A may be F, S, Cl, Br, or any (suitable) combination thereof.

Formula 2 LiNiₓCo_{y}Mn_{z}O₂

Formula 3 LiNiₓCo_{y}Al_{z}O₂

In Formulas 2 and 3, 0.8≤x≤0.95, 0≤y≤0.2, 0<z≤0.2, and x+y+z=1.

Formula 4 LiNiₓCo_{y}Mn_{z}Al_{w}O₂

In Formula 4, 0.8≤x≤0.95, 0≤y≤0.2, 0<z≤0.2, 0<w≤0.2, and x+y+z+w=1,

Formula 5 LiₐC_{Ox}M_{y}O_{2-b}A_{b}

In Formula 5, 1.0≤a≤1.2, 0≤b≤0.2, 0.9≤x≤1, 0≤y≤0.1, x+y=1, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or any (suitable) combination thereof, and A may be F, S, Cl, Br, or any (suitable) combination thereof.

Formula 6 LiₐNiₓMn_{y}M'_{z}O_{2-b}A_{b}

In Formula 6, 1.0≤a≤1.2, 0≤b≤0.2, 0<x≤0.3, 0.5≤y<1, 0<z≤0.3, x+y+z=1, M' may be cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or any (suitable) combination thereof, and A may be F, S, Cl, Br, or any (suitable) combination thereof.

Formula 7 LiₐM1ₓM2_{y}PO_{4-b}X_{b}

In Formula 7, 0.90≤a≤1.1, 0≤x≤0.9, 0≤y≤0.5, 0.9<x+y<1.1, 0≤b≤2, M1 may be chromium (Cr), manganese (Mn), iron (Fe), cobalt (Co), nickel (Ni), copper (Cu), zirconium (Zr), or any (suitable) combination thereof, M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminium (Al), silicon (Si), chromium (Cr), vanadium (V), scandium (Sc), yttrium (Y), or any (suitable) combination thereof, and X may be O, F, S, P, or any (suitable) combination thereof.

Formula 8 LiₐM3_{z}PO₄

In Formula 8, 0.90≤a≤1.1, 0.9≤z≤1.1, and M3 may be chromium (Cr), manganese (Mn), iron (Fe), cobalt (Co), nickel (Ni), copper (Cu), zirconium (Zr), or any (suitable) combination thereof.

The dry electrode active material may include, for example, a first dry electrode active material and a second dry electrode active material. The first dry electrode active material and the second dry electrode active material may have, for example, a different particle diameter from each other.

For example, the first dry electrode active material may be a large-diameter dry electrode active material in the form of particles having a larger particle diameter than that of the second dry electrode active material (also in the form of particles). For example, the second dry electrode active material may be a small-diameter dry electrode active material in the form of particles having a smaller particle diameter than that of the first dry electrode active material. For example, the first dry electrode active material may be a large-particle dry electrode active material, and the second dry electrode active material may be a small-particle dry electrode active material. For example, in voids between a plurality of particles of the first dry electrode active material, particles of the second dry electrode active material having a smaller average particle diameter than that of particles of the first dry electrode active material may be disposed. As particles of the second dry electrode active material, which are small-diameter particles, are disposed in voids between particles of the first dry electrode active material, which are large-diameter particles, the ionic conductivity and electronic conductivity of a dry electrode including the dry electrode active material may concurrently (*e.g*., simultaneously) improve. Further, the energy density of the dry electrode including the dry electrode active material may further improve. As a result, energy density and cycling performance of a lithium battery including the dry electrode active material may improve.

The first dry electrode active material and the second dry electrode active material may have, for example, a bimodal particle size distribution in the particle size distribution diagram. For example, in the particle size distribution diagram obtained utilizing a particle size analyzer (PSA) and/or the like, the composite cathode active material may show a bimodal particle size distribution having two peaks. The bimodal particle size distribution may have a first peak corresponding to the first dry electrode active material, and a second peak corresponding to the second dry electrode active material.

A particle size ratio of the first dry electrode active material and the second dry electrode active material may be, for example, about 3:1 to about 40:1, about 3:1 to about 30:1, about 3:1 to about 20:1, about 3:1 to about 10:1, or about 3:1 to about 5:1. With the first dry electrode active material and the second dry electrode active material having a particle size ratio in the above ranges, the energy density and cycling performance of a lithium battery including the composite cathode active material may further improve.

For example, the first dry electrode active material may have a particle diameter of about 8 µm to about 30 µm, about 9 µm to about 25 µm, about 9 µm to about 20 µm, about 9 µm to about 15 µm, or about 9 µm to about 12 µm. The particle diameter of the first dry electrode active material may be, for example, a median particle diameter (D50). For example, the second dry electrode active material may have a particle diameter of about 1 µm to about 8 µm, about 1 µm to about 7 µm, about 1 µm to about 6 µm, about 1 µm to about 5 µm, or about 1 µm to about 4 µm. The particle diameter of the second dry electrode active material may be, for example, a median particle diameter (D50). With the first dry electrode active material and the second dry electrode active material having an average particle diameter in the above ranges, the energy density and/or cycling performance of a lithium battery including the composite cathode active material may further improve. The particle diameter of the first dry electrode active material and the second dry electrode active material are measured, for example, by utilizing a measurement device that uses a laser diffraction technique or a dynamic light scattering technique. The particle diameter may be measured by, for example, a laser scattering particle size distribution analyzer (for example, LA-920 manufactured by HORIBA) and is a volume-based median particle diameter (D50) at a cumulative percentage of 50% from the smallest particle size. In one or more embodiments, the particle diameter of the first dry electrode active material and the second dry electrode active material may be measured utilizing scanning electron microscope (SEM) images, or an optical microscope.

A weight ratio of the first dry electrode active material and the second dry electrode active material may be, for example, about 90:10 to about 60:40, about 85:15 to about 65:35, about 80:20 to about 65:35, or about 75:25 to about 65:35. With the weight ratio of the first dry electrode active material and the second dry electrode active material being in the above ranges, the energy density and/or cycling performance of a lithium battery including the composite cathode active material may further improve.

The dry electrode film includes a dry binder. The dry binder is, for example, a binder that does not get impregnated, dissolved, or dispersed in processing solvents during the manufacturing process of a dry electrode film. The dry binder is, for example, a binder that does not contain processing solvents or does not come in contact with processing solvents during the manufacturing process of a dry electrode film. The dry binder is, for example, a fibrillized binder or a fibrous binder. The fibrillized binder or the fibrous binder may act as a matrix that supports and binds together electrode active materials and other components included in an electrode active material layer. The fibrous form of the fibrillized binder or the fibrous binder may be confirmed from, for example, a scanning electron microscopic image of a cross-section of an electrode. The fibrillized binder or the fibrous binder may have an aspect ratio (*e.g*., a ratio of the length to the width based on an image of the binder) of, for example, 10 or more, 20 or more, 50 or more, or 100 or more. The terms "fibril" or "fibrils" as utilized herein refer to the fibrous shape of a substance that has a larger aspect ratio than a particulate of said substance. As utilized herein, the terms "fibrillized" and "fibrillize" refer to a process of converting (e.g., by grinding or pulverizing) particulates of a substance into the fibrous shape (*i.e*., fibrils) of said substance that has higher aspect ratio than the particulates.

Examples of the dry binder may include polytetrafluoroethylene (PTFE), a polyvinylidene fluoride-hexapropylene (PVDF-HFP) copolymer, polyvinylidene fluoride (PVDF), polyvinyl alcohol, polyacrylonitrile, carboxymethyl cellulose (CMC), starch, hydroxypropyl cellulose, cellulose, polyvinylpyrrolidone, polyethylene, polypropylene, an ethylene-propylene-diene polymer (EPDM), sulfonated-EPDM, styrene butadiene rubber (SBR), fluororubber, and/or a copolymer thereof; however, the dry binder is not limited thereto and may be any (suitable) binder usable in the preparation of a dry electrode. The dry binder may include, for example, a fluorinated binder. The fluorinated binder may be, for example, polytetrafluoroethylene (PTFE), a polyvinylidene fluoride-hexapropylene (PVDF-HFP) copolymer, and/or polyvinylidene fluoride (PVDF).

The dry binder may have a glass transition temperature (T_{g}) of, for example, about -30 °C to about 150 °C, about 15 °C to about 150 °C, about 15 °C to about 130 °C, about 50 °C to about 130 °C, about 100 °C to about 130 °C, or about 120 °C to about 130 °C. The glass transition temperature (T_{g}) of the dry binder may be, for example, about -30 °C to about 150 °C, about -30 °C to about 100 °C, about -30 °C to about 50 °C, about -30 °C to about 15 °C, about -30 °C to about -10 °C, or about -30 °C to about -20 °C. The glass transition temperature of PTFE is, for example, about 120 °C to about 130 °C. With the dry binder having a glass transition temperature in the above ranges, the fibrillized binder or the fibrous binder may be more easily obtained during the manufacturing process of a dry electrode. The glass transition temperature of the dry binder may be for example measured by DSC (Differential Scanning Calorimeter), DMA (Dynamic Mechanical Analyzer), TMA (Thermomechanical Analyzer), and/or TGA (Thermogravimetric Analyzer).

The content (*e.g*., amount) of the dry binder may be, for example, about 0.1 wt% to about 5 wt%, about 0.5 wt% to about 4 wt%, or about 1 wt% to about 3 wt% with respect to the total weight of the dry electrode film. By including the dry binder in the above ranges, the dry electrode film may have improved adhesive strength and maintain high energy density.

The dry electrode film may further include, for example, a conductive material. The conductive material may be, for example, a dry conductive material. The dry conductive material is, for example, a conductive material that does not get impregnated, dissolved, or dispersed in processing solvents during the manufacturing process of a dry electrode film. The dry conductive material is, for example, a conductive material that does not contain processing solvents or does not come in contact with processing solvents during the manufacturing process of a dry electrode film. The dry conductive material may include, for example, a carbon-based conductive material. The carbon-based conductive material may include, for example, a fibrous carbon-based material having an aspect ratio of 10 or more, a particulate carbon-based material having an aspect ratio of less than 10, or any (suitable) combination thereof.

The fibrous carbon-based material having an aspect ratio of 10 or more may be, for example, carbon fibers, carbon nanotubes, carbon nanobelts, and/or the like, but the present disclosure is not limited thereto and may utilize any suitable material available as a carbon-based conductive material in the art. The fibrous carbon-based material having an aspect ratio of 10 or more may have an aspect ratio of for example, about 20 or more, about 30 or more, about 50 or more, or about 100 or more. The "aspect ratio" used herein may refer to the average aspect ratio and may be determined from SEM images. The fibrous carbon-based conductive material may be simply mixed with the dry electrode active material.

The particulate carbon-based material having an aspect ratio of less than 10 may be, for example, carbon black, acetylene black, Ketjenblack, natural graphite, artificial graphite, and/or the like, but the present disclosure is not limited thereto and may utilize any suitable material available as a carbon-based conductive material in the art. The aspect ratio of the particulate carbon-based material may be, for example, about 1 to about 7, about 1 to about 5, about 1 to about 3, or about 1 to about 2. The "aspect ratio" used herein may refer to the average aspect ratio and may be determined from SEM images.

The content (*e.g*., amount) of the dry conductive material included in the dry electrode film may be, for example, about 0.1 wt% to about 5 wt%, about 0.5 wt% to about 4 wt%, or about 1 wt% to about 3 wt%, with respect to the total weight of the dry electrode film. The dry electrode film may have improved conductivity by including the dry conductive material in the above ranges, and a lithium battery including this dry electrode film may have improved cycling performance.

The dry electrode film may be free of residual processing solvent. Because a dry electrode film includes a dry electrode active material, a dry binder, and may further include a dry conductive material, no (substantially no) processing solvent is utilized in the preparation process of the dry electrode film, and therefore, the dry electrode film may be free of residues of a processing solvent deliberately utilized.

For example, the dry electrode film may have a tensile strength at 25 °C of 500 kPa or more, 700 kPa or more, or 1,000 kPa or more. For example, the dry electrode film may have a tensile strength at 25 °C of about 500 kPa to about 5,000 kPa, about 700 kPa to about 5,000 kPa, or about 1,000 kPa to about 5,000 kPa. A tensile strength in a particular direction may be measured by stretching a sample at a speed of 5 mm/min in the particular direction until fracture utilizing a texture analyzer (e.g. TA.XT plus manufactured by Stable Micro Systems), and measuring the largest stress applied at fracture in a stress-strain curve. With the dry electrode film having a tensile strength in the above ranges, structural stability of the dry electrode film may improve. Therefore, the dry electrode film may maintain a stable three-dimensional conductive network during the charging and discharging processes, which leads to an improvement in reversibility of electrode reactions. With the dry electrode film having a high tensile strength in the above ranges, mechanical strength of the dry electrode film may improve. As the dry electrode film has improved mechanical strength, a local degradation due to volume changes may be inhibited or reduced during charging and discharging of an electrode provided with the dry electrode film, and a lithium battery including the same. As a result, cycling performance of the lithium battery may improve.

The dry electrode film may be, for example, a dry cathode film, and the dry cathode film may further include a sacrificial material. As the dry cathode film may further include a sacrificial material, lithium losses due to side reactions generated on the surface of anode at the initial charging and discharging of the lithium battery may be compensated for or reduced. The sacrificial material is disintegrated during the initial charging, and does not restore to its original form during discharging. The sacrificial material releases lithium in an irreversible manner. The sacrificial material may be, for example, Li₂O, Li₂O₂, Li₂S, Li₃N, LiN₃, LiF, Li₅FeO₄, Li₂NiO₂, Li₆CO₄, Li₂MoO₃, or any mixture thereof. A content (*e.g*., amount) of the sacrificial material may be about 0.1 parts by weight to about 10 parts by weight, about 0.1 parts by weight to about 5 parts by weight, or about 0.1 parts by weight to about 3 parts by weight, with respect to 100 parts by weight of the dry cathode film. The sacrificial material may be disposed around one side of the dry cathode film that is adjacent to the anode and not disposed around the other side opposing the one side. For example, the sacrificial material may exhibit a concentration gradient that decreases in concentration from one side of the dry cathode film that is adjacent to the anode to the other side opposing the one side. With the sacrificial material disposed around the one side of the dry cathode film adjacent to the anode, it may be possible to more effectively compensate for lithium loss at the anode and prevent or reduce capacity fading of the lithium battery. In one or more embodiments, the sacrificial material may be disposed around the other side of the dry cathode film that is adjacent to the cathode current collector, and not disposed around one side opposing the other side. As the sacrificial material releases lithium in an irreversible manner, a gas may be generated as a by-product. As the sacrificial material acts as a pore former, additional pores are formed around the other side of the dry cathode film that is adjacent to the cathode current collector, which increases the area of contact between the cathode active material and the electrolyte in regions adjacent to the cathode current collector, and as a result, high-rate capability and/or cycling performance of the lithium battery may further improve.

A dry electrode according to one or more embodiments includes an electrode current collector and the dry electrode film described above disposed on one side or both sides (*e.g*., opposite sides) of the electrode current collector.

As the dry electrode includes the dry electrode film, the dry electrode may have a decreased internal resistance and improved mechanical properties.

The electrode current collector may include, for example, a substrate.

Materials constituting the substrate may be any conductive material that does not react (or should not substantially react) with lithium, for example, any conductive material that does not form an alloy or a compound with lithium. The base material may be, for example, a metal or an alloy. For example, the substrate may include (*e.g*., consist of) indium (In), copper (Cu), magnesium (Mg), stainless steel (SUS), titanium (Ti), iron (Fe), cobalt (Co), nickel (Ni), zinc (Zn), aluminium (Al), germanium (Ge), and/or an alloy thereof. The substrate may have a form of (*e.g*., selected from among) a sheet, a foil, a film, a plate, a porous structure, a mesoporous structure, a through-hole containing structure, a polygonal ring, a mesh, a foam, and/or a nonwoven structure, but the present disclosure is not limited to the aforementioned forms and may have any suitable form utilized in the art.

For example, the electrode current collector may include a substrate and an interlayer disposed between the substrate and the dry electrode film. The interlayer may include, for example, a carbon-based conductive material.

For example, the interlayer may be directly disposed on one side or both sides (*e.g*., opposite sides) of the substrate. Therefore, there may be no other layers disposed between the substrate and the interlayer. With the interlayer directly disposed on one side or both sides (*e.g*., opposite sides) of the substrate, adhesion between the substrate and the dry electrode film may further improve.

The interlayer may have a thickness of, for example, about 0.01% to about 30%, about 0.1% to about 30%, about 0.5% to about 30%, about 1% to about 25%, about 1% to about 20%, about 1% to about 15 %, about 1% to about 10%, about 1% to about 5%, or about 1% to about 3%, with respect to the thickness of the substrate. The interlayer may have a thickness of, for example, about 10 nm to about 5 µm, about 50 nm to about 5 µm, about 200 nm to about 4 µm, about 500 nm to about 3 µm, about 500 nm to about 2 µm, about 500 nm to about 1.5 µm, about 700 nm to about 1.3 µm. With the interlayer having a thickness in the above ranges, adhesion between the substrate and the dry electrode film may further improve, and an increase of interfacial resistance may be inhibited or reduced.

The interlayer may include, for example, a carbon-based conductive material. The carbon-based conductive material included in the interlayer may be at least one of (*e.g*., may be selected from among) the carbon-based conductive materials utilized in the dry electrode film. The interlayer may include the same carbon-based conductive material as the carbon-based conductive material utilized in the dry electrode film. With the carbon-based conductive material included in the interlayer, the interlayer may be, for example, a conductive layer.

The interlayer may further include, for example, a binder. With the interlayer further including a binder, adhesion between the substrate and the dry electrode film may further improve. The binder included in the interlayer may be, for example, a conductive binder or a non-conductive binder. The conductive binder may be, for example, an ionically conductive binder and/or an electronically conductive binder. A binder having both (*e.g*., simultaneously) ionic conductivity and electronic conductivity may belong to both (*e.g*., simultaneously) ionically conductive binders and electronically conductive binders.

The binder included in the interlayer may be at least one of (*e.g*., may be selected from among) the binders utilized in the dry electrode film. The interlayer may include the same binder as the binder utilized in the dry electrode film. The binder included in the interlayer may be, for example, a fluorinated binder. The fluorinated binder included in the interlayer may be, for example, polyvinylidene fluoride (PVDF). The interlayer may be, for example, an adhesive layer including a binder. The interlayer may be, for example, a conductive layer that includes a binder and a carbon-based conductive material.

The interlayer may be disposed on the substrate by, for example, a dry method or a wet method. The interlayer may be disposed on the substrate by a dry method, for example, by deposition such as CVD, PVD, and/or the like. The interlayer may be disposed on the substrate by a wet method, for example, by spin coating, dip coating, and/or the like. For example, the interlayer may be disposed on the substrate by deposition of a carbon-based conductive material on the substrate. The dry-coated interlayer may be composed of a carbon-based conductive material and may not contain a binder. For example, the interlayer may be disposed on the substrate by having a composition containing a carbon-based conductive material, a binder, and a solvent, coated and dried on the surface of the substrate. The interlayer may be a monolayer structure or a multilayer structure including a plurality of layers. The multilayer structure may be a two-layer structure, a three-layer structure, a four-layer structure, and/or the like.

The electrode current collector may include a base film and a metal layer disposed on one side or both sides (*e.g*., opposite sides) of the base film. For example, the electrode current collector may include a substrate, and the substrate may have a structure including a base film and a metal layer disposed on one side or both sides (*e.g*., opposite sides) of the base film. The base film may include, for example, a polymer. For example, the polymer may be a thermoplastic polymer. For example, the polymer may include polyethylene terephthalate (PET), polyethylene (PE), polypropylene (PP), polybutylene terephthalate (PBT), polyimide (PI), or any (suitable) combination thereof. Due to a thermoplastic polymer included in the base film, the base film melts in the event of a short circuit, thereby inhibiting or reducing a rapid increase in current. For example, the base film may be an insulator. The metal layer may include, for example, copper (Cu), stainless steel, titanium (Ti), iron (Fe), cobalt (Co), nickel (Ni), or an alloy thereof. The metal layer may be disconnected in the event of an overcurrent, thus acting as an electrochemical fuse to provide protection against short circuits. A limiting current and a maximum current may be controlled or selected through controlling a thickness of the metal layer. The metal layer may be plated or deposited on the base film. As the thickness of the metal layer decreases, the limiting current and/or maximum current of the electrode current collector may decrease, which may lead to an improvement in stability of the lithium battery in case of a short circuit. A lead-tab may be added on the metal layer for connection to the outside. The lead-tab may be welded to the metal layer or a metal layer/base film laminate by ultrasonic welding, laser welding, spot welding, and/or the like. As the base film and/or the metal layer melt during welding, the metal layer may be electrically connected to the lead-tab. For stronger welding between the metal layer and the lead tab, a metal chip may be added between the metal layer and the lead tab. The metal chip may be a flake of the same material as the metal of the metal layer. For example, the metal chip may be a metal foil, a metal mesh, and/or the like. For example, the metal chip may be an aluminium foil, a copper foil, an SUS (stainless steel) foil, and/or the like. By welding the metal layer with the lead-tab after placing the metal chip on the metal layer, the lead-tab may be welded to a metal chip/metal layer laminate or a metal chip/metal layer/base film laminate. As the base film, the metal layer, and/or the metal chip melt during welding, the metal layer or the metal layer/metal chip laminate may be electrically connected to the lead-tab. A metal chip and/or a lead-tab may be further added on a part of the metal layer. For example, the base film may have a thickness of about 1 µm to about 50 µm, about 1.5 µm to about 50 µm, about 1.5 µm to about 40 µm, or about 1 µm to about 30 µm. With the base film having a thickness within the above ranges, the weight of the electrode assembly may be more effectively reduced. For example, the base film may have a melting point of about 100 °C to about 300 °C, about 100 °C to about 250 °C or less, or about 100 °C to about 200 °C. With the base film having a melting point within the above ranges, the base film may melt and be easily bonded to the lead-tab while welding the lead-tab. To improve adhesion between the base film and the metal layer, a surface treatment such as corona treatment may be performed on the base film.

For example, the metal layer may have a thickness of about 0.01 µm to about 3 µm, about 0.1 µm to about 3 µm, about 0.1 µm to about 2 µm, or about 0.1 µm to about 1 µm. With the metal layer having a thickness within the above ranges, the electrode assembly may provide stability while maintaining conductivity. For example, the metal chip may have a thickness of about 2 µm to about 10 µm, about 2 µm to about 7 µm, or about 4 µm to about 6 µm. With the metal chip having a thickness within the above ranges, the metal layer and the lead-tab may be more easily connected. With the electrode current collector having the above structure, the weight of the electrode may be reduced and as a result, energy density may improve. The electrode current collector may be, for example, a cathode current collector. The electrode current collector may be, for example, an anode current collector.

The dry electrode film included in a dry electrode corresponds to an electrode active material layer.

When the electrode active material layer of the dry electrode is measured by a surface and interfacial cutting analysis system (SAICAS), a change of vertical relative binding force (F_{VR}) according to depth from a first point, which is 5% away from a surface of the electrode active material layer in a direction from the surface of the electrode active material layer to the electrode current collector, to a second point, which is 5% away from a surface of the electrode current collector in a direction from the surface of the electrode current collector to the electrode active material layer, may be 300% or less, wherein the first and second point positions are given with respect to the total thickness of the electrode active material layer. The change in vertical relative binding force (F_{VR}) may be, for example, about 10% to about 300%, about 10% to about 250%, about 10% to about 200%, about 10% to about 150%, or about 10% to about 100%. For example, the second point which is 5% away from the surface of the electrode current collector in a direction from the surface of the electrode current collector to the electrode active material layer may correspond to a point that is 95% away from the surface of the electrode active material layer in a direction from the surface of the electrode active material layer to the electrode current collector, with respect to the total thickness of the electrode active material layer. Vertical relative binding force is calculated by Equation 1. For the SAICAS measurement method, refer to Evaluation Example 5, for example. Change in Vertical Relative Binding Force (FVR) = [(Maximum Vertical Relative Binding Force (FVR2) - Minimum Vertical Relative Binding Force (FVR1)) / Minimum Vertical Relative Binding Force (FVR1)] × 100

As in the electrode active material layer of the dry electrode, the change in vertical relative binding force (F_{VR}) as measured by the SAICAS is 300% or less, the distribution of constituent components in the electrode may be more (*e.g*., substantially more) uniform. Further, because side reactions and an increase of internal resistance due to non-uniform (*e.g*., substantially non-uniform) distribution of constituent components in the electrode active material layer are inhibited or reduced, reversibility of electrode reactions may improve. Even for an electrode with high loading capacity, the cycling performance of the lithium battery may improve.

When the electrode active material layer of the dry electrode is measured by the SAICAS, a horizontal binding force ratio of first horizontal binding force (F_{H1}) at a first point, which is 10% away from a surface of the electrode active material layer in a direction from the surface of the electrode active material layer to the electrode current collector, to second horizontal binding force (F_{H2}) at a second point, which is 10% away from a surface of the electrode current collector in a direction from the surface of the electrode current collector to the electrode active material layer (*e.g*., depth direction), may be 50% or more, wherein the first and second point positions are given with respect to the total depth from the surface of the electrode active material layer to the surface of the electrode current collector. The horizontal binding force ratio may be, for example, about 50% to 100%, about 60% to 100%, about 70% to 100%, about 80% to 100%, or about 90% to 100%. For example, the second point which is 10% away from the surface of the electrode current collector in a direction from the surface of the electrode current collector to the electrode active material layer may correspond to a point that is 90% away from the surface of the electrode active material layer in a direction from the surface of the electrode active material layer to the electrode current collector, with respect to the total thickness of the electrode active material layer. For example, horizontal relative binding force ratio may be represented by Equation 2. For the SAICAS measurement method, refer to Evaluation Example 6, for example. Horizontal Relative Binding Force Ratio = [2nd Horizontal Binding Force (FH2) / 1 st Horizontal Binding Force (FH1)] × 100

As the horizontal relative binding force ratio is 50% or more as measured by the SAICAS, the distribution of constituent components inside the electrode may be more (*e.g*., substantially more) uniform. With the dry electrode having a horizontal relative binding force ratio in the above ranges, the cycling performance of a lithium battery employing the dry electrode may further improve.

The dry electrode may be a dry cathode, for example. The dry cathode may include a dry cathode film, and the dry cathode film may include a dry cathode active material having the core/shell structure described above.

The dry cathode active material having the core/shell structure may include a lithium transition metal oxide in the core, and the shell may include 1 wt% or more of an element of Period 2 of the Periodic Table of the Elements of (*e.g*., selected from among) Be, B, F, and/or any (suitable) combination thereof.

The dry cathode active material may further include a generally available / generally utilized dry cathode active material in addition to the dry cathode active material having the core/shell structure described above. For the dry cathode active material, any (suitable) material generally available as a dry cathode active material in the art may be utilized without limitation.

For example, the cathode active material may utilize at least one composite oxide of lithium with a metal of (*e.g*., selected from among) cobalt, manganese, nickel, and/or any (suitable) combination thereof. For example, a compound represented by any one of the following formulae may be utilized: LiₐA_{1-b}B'_{b}D₂ (wherein 0.90≤a≤1 and 0≤b≤0.5); LiₐE_{1-b}B'_{b}O_{2-c}D_{c} (wherein 0.90≤a≤1, 0≤b≤0.5, and 0≤c≤0.05); LiE_{2-b}B'_{b}O_{4-c}D_{c} (wherein 0≤b≤0.5 and 0≤c≤0.05); LiₐNi_{1-b-c}Co_{b}B'_{c}D_{α} (wherein 0.90≤a≤1, 0≤b≤0.5, 0≤c≤0.05, and 0<a≤2); LiₐNi_{1-b-c}Co_{b}B'_{c}O_{2-α}F_{α} (wherein 0.90≤a≤1, 0≤b≤0.5, 0≤c≤0.05, and 0<α<2); LiₐNi_{1-b-c}Co_{b}B'_{c}O_{2-α}F'₂ (wherein 0.90≤a≤1, 0≤b≤0.5, 0≤c≤0.05, and 0<α<2); LiₐNi_{1-b-c}Mn_{b}B'_{c}D_{α} (wherein 0.90≤a≤1, 0≤b≤0.5, 0≤c≤0.05, and 0<α≤2); LiₐNi_{1-b-c}Mn_{b}B'_{c}O_{2-α}F'_{α} (wherein 0.90≤a≤1, 0≤b≤0.5, 0^{<}_c<_0.05, and 0<α<2); LiₐNi_{1-b-c}Mn_{b}B'_{c}O_{2-α}F'₂ (wherein 0.90≤a≤1, 0≤b≤0.5, 0≤c≤0.05, and 0<α<2); LiₐNi_{b}E_{c}G_{d}O₂ (wherein 0.90≤a≤1, 0≤b≤0.9, 0≤c≤0.5, and 0.001≤d≤0.1); LiₐNi_{b}Co_{c}Mn_{d}G_{c}O₂ (wherein 0.90≤a≤1, 0≤b≤0.9, 0≤c≤0.5, 0≤d≤0.5, and 0.001≤e≤0.1); LiₐNiG_{b}O₂ (wherein 0.90≤a≤1 and 0.001≤b≤0.1); LiₐCoG_{b}O₂ (wherein 0.90≤a≤1 and 0.001≤b≤0.1); LiₐMnG_{b}O₂ (wherein 0.90≤a≤1 and 0.001≤b≤0.1); LiₐMn₂G_{b}O₄ (wherein 0.90≤a≤1 and 0.001≤b≤0.1); QO₂; QS₂; LiQS₂; V₂O₅; LiV₂O₅; LiI'O₂; LiNiVO₄; Li_{(3-f)}J₂(PO₄)₃ (wherein 0≤f≤2); Li_{(3-f)}Fe₂(PO₄)₃ (wherein 0≤f≤2); and/or LiFePO₄.

In the formulae representing the above-described compounds, A may be nickel (Ni), cobalt (Co), manganese (Mn), or any (suitable) combination thereof; B' may be aluminium (Al), Ni, Co, Mn, chromium (Cr), iron (Fe), magnesium (Mg), strontium (Sr), vanadium (V), a rare earth element, or any (suitable) combination thereof; D may be oxygen (O), fluorine (F), sulfur (S), phosphorus (P), or any (suitable) combination thereof; E may be Co, Mn, or any (suitable) combination thereof; F' may be F, S, P, or any (suitable) combination thereof; G may be Al, Cr, Mn, Fe, Mg, lanthanum (La), cerium (Ce), Sr, V, or any (suitable) combination thereof; Q may be titanium (Ti), molybdenum (Mo), Mn, or any (suitable) combination thereof; I' may be Cr, V, Fe, Sc, yttrium (Y), or any (suitable) combination thereof; and J may be V, Cr, Mn, Co, Ni, copper (Cu), or any (suitable) combination thereof.

A coating layer may be provided on the surface of the above-described compound, and the resulting compound with such a coating layer may be utilized. Further, a mixture of the above-described compound and the compound with such a coating layer may be utilized. The coating layer provided on the surface of the above-described compound may include a coating element compound, such as an oxide of a coating element, a hydroxide of a coating element, an oxyhydroxide of a coating element, an oxycarbonate of a coating element, and/or a hydroxycarbonate of a coating element. The compound constituting this coating layer may be amorphous or crystalline. The coating element included in the coating layer may be magnesium (Mg), aluminium (Al), cobalt (Co), potassium (K), sodium (Na), calcium (Ca), silicon (Si), titanium (Ti), vanadium (V), tin (Sn), germanium (Ge), gallium (Ga), boron (B), arsenic (As), zirconium (Zr), or any (suitable) mixture thereof. The method of forming the coating layer may be selected within a range that does not adversely affect physical properties of the cathode active material. The coating method may be, for example, spray coating, a dipping method, and/or the like. Detailed descriptions of the coating methods may not be provided here as they may be well understood by those in the art.

The dry electrode may be a dry anode, for example. The dry anode may include a dry anode film, and the dry anode film may include a dry anode active material.

The dry anode active material may be any (suitable) material utilized as an anode active material of a lithium battery in the art. For example, the dry anode active material may include at least one of (*e.g*., selected from among) lithium metal, a metal alloyable with lithium, a transition metal oxide, a non-transition metal oxide, and/or a carbon-based material. Examples of the metal alloyable with lithium may include Si, Sn, Al, Ge, Pb, Bi, Sb, a Si-Y alloy (wherein Y is an alkali metal, an alkaline earth metal, an element of Group 13, an element of Group 14, a transition metal, a rare earth metal, or any (suitable) combination thereof, but not Si), a Sn-Y alloy (wherein Y is an alkali metal, an alkaline earth metal, an element of Group 13, an element of Group 14, a transition metal, a rare-earth metal, or any (suitable) combination thereof, but not Sn) and/or the like. For example, Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or any (suitable) combination thereof. Examples of the transition metal oxide may include a lithium titanium oxide, a vanadium oxide, a lithium vanadium oxide, and/or the like. The non-transition metal oxide may be, for example, SnO₂, SiOₓ (0≤x<2), and/or the like. Examples of the carbon-based material may include a crystalline carbon, an amorphous carbon, or a mixture thereof. Examples of the crystalline carbon may include graphite, such as artificial graphite or natural graphite in shapeless, plate, flake, spherical or fiber form. Examples of the amorphous carbon may include soft carbon (low-temperature calcined carbon) or hard carbon, mesophase pitch carbides, calcined cokes, and/or the like.

According to one or more embodiments, a lithium battery may include a first electrode, a second electrode, and an electrolyte disposed between the first electrode and the second electrode, wherein the first electrode, the second electrode, or a combination thereof is the dry electrode described above.

As a lithium battery includes a dry electrode with reduced internal resistance and improved mechanical properties, the lithium battery may have improved cycling performance.

For example, the lithium battery may include a dry cathode, may include a dry anode, or may include a dry anode and a dry cathode. For example, the lithium battery may include a dry cathode and a wet anode, or may include a wet cathode and a dry anode.

The lithium battery may include an electrolyte, wherein the electrolyte may include a liquid electrolyte, a solid electrolyte, or any (suitable) combination thereof.

The liquid electrolyte may be, for example, an organic electrolyte. The organic electrolyte may be prepared by dissolving a lithium salt in an organic solvent.

For the organic solvent, any (suitable) organic solvent available in the art may be utilized. Examples of the organic solvent may include propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, and/or any (suitable) mixture thereof.

For the lithium salt, any (suitable) lithium salt available in the art may be utilized. For example, the lithium salt may be LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (wherein x and y are natural numbers), LiCl, Lil, or any (suitable) mixture thereof.

Examples of the solid electrolyte may include an inorganic solid electrolyte, an organic solid electrolyte, an organic-inorganic hybrid solid electrolyte, or any (suitable) combination thereof.

Examples of the solid electrolyte may include an oxide-based solid electrolyte, a sulfide-based solid electrolyte, a polymer solid electrolyte, or any (suitable) combination thereof.

The solid electrolyte may be, for example, a boron oxide, a lithium oxynitride, and/or the like, but the present disclosure is not limited thereto and may be any suitable solid electrolyte available in the art. The solid electrolyte may be formed on the anode by methods such as sputtering, for example, or a separate solid electrolyte sheet may be stacked on the anode.

For example, the oxide-based all-solid electrolyte may include Li_{1+x+y}AlₓTi₂₋ₓSi_{y}P_{3-y}O₁₂ (0<x<2 and 0≤y<3), BaTiO₃, Pb(Zr,Ti)O₃ (PZT), Pb₁₋ₓLaₓZr_{1-y}Ti_{y}O₃ (PLZT, 0≤x<1 and 0≤y<1), Rb(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (0<x<2 and 0<y<3), LiₓAl_{y}Ti_{z}(PO₄)₃ (0<x<2, 0<y<1, and 0<z<3), Li_{1+x+y}(Al, Ga)ₓ(Ti, Ge)₂₋ₓSi_{y}P_{3-y}O₁₂ (0≤x≤1 and 0≤y≤1), LiₓLa_{y}TiO₃ (0<x<2 and 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂ (M = Te, Nb, or Zr, 0≤x≤10), Li₃₊ₓLa₃Zr_{2-y}M_{y}O₁₂ (M doped LLZO, M=Ga, W, Nb, Ta, Al or any (suitable) combination thereof, 0≤x≤10 and 0<y<2), Li₇La₃Zr₂₋ₓTaₓO₁₂ (0<x<2, LLZ-Ta), and/or any (suitable) combination thereof. The oxide-based solid electrolyte may be, for example, a garnet-type or kind solid electrolyte. The oxide-based solid electrolyte may be produced by a sintering method and/or the like.

The oxide-based solid electrolyte may include Li₇La₃Zr₂O₁₂(LLZO), Li_{6.5}La₃Zr_{1.5}Ta_{0.5}O₁₂, Li_{1.3}Al_{0.3}Ti_{1.7}(PO₄)₃, Li_{0.34}La_{0.5}TiO_{2.94}, Li_{1.07}Al_{0.69}Ti_{1.46}(PO₄)₃, 50Li₄SiO₄-50Li₂BO₃, 90Li₃BO₃-10Li₂SO₄, Li_{2.9}PO_{3.3}N_{0.46}, or any (suitable) combination thereof.

The sulfide-based solid electrolyte may be, for example, at least one of (e.g., selected from among) Li₂S-P₂S₅, Li₂S-P₂S₅-LiX (wherein X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein m and n each are a positive number, and Z is Ge, Zn or Ga), Li₂S-GeS₂, Li₂S-SiS₂-Li₃PO₄, Li₂S-SiS₂-LiₚMO_{q} (wherein p and q each are a positive number, and M is P, Si, Ge, B, Al, Ga or In), Li₇₋ₓPS₆₋ₓClₓ (wherein 0≤x≤2), Li₇₋ₓPS₆₋ₓBrₓ (wherein 0≤x≤2), and/or Li₇₋ₓPS₆₋ₓIₓ (wherein 0≤x≤2). The sulfide-based solid electrolyte may be prepared by treating starting materials, such as Li₂S and P₂S₅, by a method such as melt-quenching, mechanical milling, and/or the like. In one or more embodiments, following such a treatment, a heat treatment may be conducted. The sulfide-based solid electrolyte may be amorphous or crystalline, or may be in a mixed state thereof.

For example, the sulfide-based solid electrolyte may include an argyrodite-type or kind solid electrolyte represented by Formula 9:

Formula 9 Li⁺₁₂₋ₙ₋ₓAⁿ⁺X²⁻₆₋ₓY⁻ₓ

In Formula 9, A may be P, As, Ge, Ga, Sb, Si, Sn, Al, In, Ti, V, Nb, or Ta, X may be S, Se, or Te, Y may be Cl, Br, I, F, CN, OCN, SCN, or N₃, and 1≤n≤5 and 0≤x≤2 may be satisfied.

The sulfide-based solid electrolyte may be an argyrodite-type or kind compound including one or more of (*e.g*., selected from among) Li₇₋ₓPS₆₋ₓClₓ (wherein 0≤x≤2), Li₇₋ₓPS₆₋ₓBrₓ (wherein 0≤x≤2), and/or Li₇₋ₓPS₆₋ₓIₓ (wherein 0≤x≤2). In one or more embodiments, the sulfide-based solid electrolyte included in the solid electrolyte may include an argyrodite-type or kind compound including at least one of (*e.g*., selected from among) Li₆PS₆Cl, Li₆PS₅Br, and/or Li₆PS₆I.

The polymeric solid electrolyte may be, for example, a solid electrolyte including an ionically conductive polymer and a lithium salt, a solid electrolyte including a polymeric ionic liquid and a lithium salt, or any (suitable) combination thereof.

The ionically conductive polymer may be a polymer that contains an ionically conductive repeating unit in its main chains or side chains. The ionically conductive repeating unit is a unit having ionic conductivity, and may be, for example, an alkylene oxide unit, a hydrophilic unit, and/or the like. The ionically conductive polymer may include, as an ionically conductive repeating unit, an ether-based monomer, an acrylate-based monomer, a methacrylate-based monomer, a siloxane-based monomer, or any (suitable) combination thereof. Examples of the ionically conductive polymer may include, for example, polyethylene oxide, polypropylene oxide, polymethyl methacrylate, polyethyl methacrylate, polydimethylsiloxane, polyacrylic acid, polymethacrylic acid, polymethylacrylate, polyethyl acrylate, poly(2-ethylhexyl acrylate), polybutyl methacrylate, poly(2-ethylhexyl methacrylate), polydecyl acrylate, polyethylene vinyl acetate, or any (suitable) combination thereof. The ionically conductive polymer may be, for example, polyethylene oxide (PEO), polyvinyl alcohol (PVA), polyvinylpyrrolidone (PVP), polyvinylsulfone, or any (suitable) combination thereof.

The polymeric ionic liquid (PIL) may include a repeating unit that includes, for example, i) at least one cation of (*e.g*., at least one cation selected from among) ammonium, pyrrolidinium, pyridinium, pyrimidinium, imidazolium, piperidinium, pyrazolium, oxazolium, pyridazinium, phosphonium, phosphonium, sulfonium, triazole, and/or a mixture thereof; and ii) at least one anion of (e.g., at least one anion selected from among) BF₄-, PF₆-, AsF₆-, SbF₆-, AlCl₄-, HSO₄-, ClO₄-, CH₃SO₃-, CF₃CO₂-, (CF₃SO₂)₂N-, Cl-, Br-, I-, BF₄-, SO₄⁻, PF₆-, ClO₄-, CF₃SO₃-, CF₃CO₂-, (C₂F₅SO₂)₂N-, (C₂F₅SO₂)(CF₃SO₂)N-, NO₃⁻, Al₂Cl₇⁻, AsF₆⁻, SbF₆⁻, CF₃COO⁻, CH₃COO⁻, CF₃SO₃⁻, (CF₃SO₂)₃C⁻, (CF₃CF₂SO₂)₂N⁻, (CF₃)₂PF₄⁻, (CF₃)₃PF₃⁻, (CF₃)₄PF₂⁻, (CF₃)₅PF⁻, (CF₃)₆P⁻, SF₅CF₂SO₃⁻, SF₅CHFCF₂SO₃⁻, CF₃CF₂(CF₃)₂CO⁻, (CF₃SO₂)₂CH⁻, (SF₅)₃C⁻, (O(CF₃)₂C₂(CF₃)₂O)₂PO⁻, and/or (CF₃SO₂)₂N⁻. The PIL may be, for example, poly(diallyldimethylammonium) TFSI, poly(1-allyl-3-methylimidazolium trifluoromethanesulfonylimide), poly(N-methyl-N-propylpiperidinium bis(trifluoromethanesulfonyl)imide), or any (suitable) combination thereof.

Examples of the lithium salt may include LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (1≤x≤20 and 1≤y≤20), LiCl, LiI, or any (suitable) combination thereof.

A method of preparing a dry electrode according to one or more embodiments is provided.

The method of preparing a dry electrode may include: providing a dry electrode film; and disposing the dry electrode film on one side or both sides (*e.g*., opposite sides) of an electrode current collector.

The providing a dry electrode film may include: preparing a dry mixture by dry-mixing a dry electrode active material, a dry conductive material, and a dry binder; and preparing a dry electrode film by forming the dry mixture.

First, a dry mixture may be prepared by dry-mixing an electrode active material, a dry conductive material, and a dry binder. For example, a dry mixture may be prepared by dry-mixing a dry electrode active material, a dry conductive material, and a dry binder.

The term "dry-mixing" as used herein may refer to a process of mixing in the absence of processing solvent. The processing solvent may be, for example, a solvent utilized in the preparation of an electrode slurry. For example, the processing solvent may be water, NMP, and/or the like, but the present disclosure is not limited thereto and may be any processing solvent available for utilization in the preparation of an electrode slurry. The dry-mixing may be carried out utilizing an agitator, at a temperature of about 15 °C to 65 °C, at a rotation rate of about 10 rpm to about 10,000 rpm. The dry-mixing may be carried out utilizing an agitator, for a duration of, for example, about 1 minute to about 200 minutes.

The dry-mixing may be carried out, for example, twice or more. First, a first dry mixture may be prepared through first dry-mixing of a dry electrode active material, a dry conductive material, and a dry binder. The first dry-mixing may be carried out, for example, at a temperature of about 25 °C to about 65 °C, at a rotation rate of about 10 rpm to 2,000 rpm or less, for a duration of 15 minutes or less. Then, a second mixture may be prepared through second dry-mixing of the first dry mixture. For example, the second dry-mixing may be carried out at a temperature of about 25 °C to about 65 °C, at a rotation rate of about 3,000 rpm to about 9,000 rpm, for a duration of about 10 minutes to about 60 minutes. Through the second dry-mixing, a dry mixture containing a fibrillated dry binder may be obtained.

The agitator may be, for example, a kneader. The agitator may include, for example, a chamber; at least one rotary shaft disposed inside the chamber and rotating; and a blade rotatably coupled to the rotary shaft and arranged in a longitudinal direction of the rotary shaft. The blade may be, for example, at least one of (*e.g*., selected from among) a ribbon blade, a sigma blade, a Z blade, a dispersing blade, and/or a screw blade. By including the blade, a dough-like mixture may be prepared even without utilizing solvent by effectively mixing the electrode active material, dry conductive material, and the dry binder.

For example, the dry binder may utilize a vinylidene fluoride/hexafluoropropylene copolymer, polyvinylidene fluoride, polyacrylonitrile, polymethylmethacrylate, polytetrafluoroethylene (PTFE), any (suitable) mixture of the aforementioned polymers, a styrene butadiene rubber-based polymer, and/or the like. The dry binder may be (*e.g*., may be selected from among) the dry binders utilized in the dry electrode film.

Examples of the dry conductive material may include: carbon black, graphite powder, natural graphite, artificial graphite, acetylene black, Ketjenblack, and/or carbon fibers; carbon nanotubes; metal powder, metal fibers, or metal tubes, such as copper, nickel, aluminium, and silver; and/or conductive polymers such as polyphenylene derivatives and/or the like. However, the dry conductive material is not limited to the aforementioned examples and may be any (suitable) material utilized as a conductive material in the art. The conductive material may be, for example, a carbon-based conductive material. The dry conductive material may be (*e.g*., may be selected from among) the dry conductive materials utilized in the dry electrode film described above.

It is also possible to form pores in the electrode plate by further adding a plasticizer or a pore former to the dry mixture.

The amount of each of the dry electrode active material, the dry binder, and the dry conductive material utilized in the dry electrode film may be at a level generally or suitably utilized in a lithium battery.

The dry cathode film may utilize a dry cathode active material as a dry electrode active material. For more details of the dry cathode active material, refer to the dry electrode film described above. The dry anode film may utilize a dry anode active material as a dry electrode active material. For more details of the dry anode active material, refer to the dry electrode film described above.

Next, a dry electrode film may be prepared by molding the dry mixture.

The prepared dry mixture may be introduced into an extrusion device and extruded into a sheet or film form. The pressure during extrusion may be, for example, about 4 MPa to about 100 MPa.

Next, an electrode current collector with an interlayer disposed on one side or both sides (*e.g*., opposite sides) of a substrate may be provided.

The process of providing an electrode current collector with an interlayer disposed on one side or both sides (*e.g*., opposite sides) of a substrate may include, for example: providing a substrate; and disposing an interlayer on one or both sides (*e.g*., opposite sides) of the substrate.

For more details of the substrate of the electrode current collector, refer to the electrode current collector described above. The substrate of the cathode current collector may be, for example, an aluminium foil. The substrate of the anode current collector may be, for example, a copper foil.

The process of disposing an interlayer on one side or both sides (*e.g*., opposite sides) of the substrate may include dry coating and/or wet coating. The dry coating may involve, for example, coating one side or both sides (*e.g*., opposite sides) of an electrode current collector with a carbon-based conductive material and/or a precursor thereof, by deposition and/or the like. The deposition may be conducted at a temperature in a range of room temperature to a high temperature, at a pressure in a range of an atmospheric pressure to a vacuum. The interlayer disposed by dry coating may be composed of a carbon-based material without containing a binder. The wet coating may involve, for example, coating one side or both sides (*e.g*., opposite sides) of an electrode current collector with a composition containing a carbon-based conductive material and a binder. The composition may include, for example, a carbon-based conductive material, a binder, and a processing solvent. For more details of the carbon-based conductive material and the binder, refer to the electrodes described above. The processing solvent may be (*e.g*., may be selected from among) the solvents utilized in the preparation of an electrode slurry. The processing solvent may be removed through drying after the composition is coated on the electrode current collector. The coating method may include spin coating, dip coating, and/or the like, but the present disclosure is not limited thereto and any (suitable) coating method available in the art may be utilized.

Next, a dry electrode may be prepared by disposing the dry electrode film on one side or both sides (*e.g*., opposite sides) of the electrode current collector in a concurrent (*e.g*., simultaneous) or sequential manner.

While and/or after disposing the dry electrode film on one side or both sides (*e.g*., opposite sides) of the electrode current collector, a rolling process may be added.

The rolling may be performed by, for example, a roll press, a flat press, and/or the like, but the present disclosure is not necessarily limited thereto. The pressure during rolling may be, for example, about 1.0 ton/cm² to about 10.0 ton/cm². If (*e.g*., when) the pressure during rolling is excessively high, a crack may form in the electrode current collector. If (*e.g*., when) the pressure during rolling is excessively low, adhesion between the electrode current collector and the dry electrode film may decrease.

A lithium battery may be prepared by the method described below as an example; however, the method of preparing the lithium battery is not necessarily limited to this method, and may vary according to conditions desired and/or required.

First, one or both of a cathode and an anode may be prepared following the dry electrode preparation method described above. In one or more embodiments, if (*e.g*., when) one electrode of a cathode and an anode is prepared by the dry electrode preparation method described above, the other electrode may be prepared by a wet preparation method. For example, the other electrode may be prepared by preparing an electrode slurry containing an electrode active material, a conductive material, a binder, and a solvent, and then coating and drying the prepared electrode slurry on an electrode current collector. The conductive material and the binder included in the electrode prepared by the wet method may be (*e.g*., may be selected from among) the conductive materials and/or binders utilized in the preparation of dry electrodes described above.

Next, a separator to be inserted between the cathode and the anode may additionally be prepared. In one or more embodiments, the separator may not be provided.

The separator may be any (suitable) separator generally utilized in a lithium battery. For the separator, for example, any separator capable of retaining a large quantity of electrolyte liquid while exhibiting low resistance to migration of ions in the electrolyte may be utilized. For example, the separator may be in the form of a non-woven fabric or woven fabric that is formed of a material of (*e.g*., selected from among) glass fiber, polyester, Teflon, polyethylene, polypropylene, polytetrafluoroethylene (PTFE), and/or any (suitable) combination thereof. A lithium ion battery may utilize, for example, a rollable separator formed of polyethylene, polypropylene, and/or the like. A lithium ion polymer battery may utilize, for example, a separator with excellent or suitable organic electrolyte impregnation ability.

The separator may be prepared by the method described below as an example; however, the present disclosure is not necessarily limited to this method, the method may be adjusted according to conditions desired and/or required.

First, a separator composition may be prepared by mixing a polymer resin, a filler, and a solvent. The separator composition may be directly coated and dried on top of an electrode to form a separator. In one or more embodiments, the separator composition may be cast and dried on a support, and a separator film exfoliated from the support may be laminated on top of an electrode to form a separator.

The polymer utilized in the preparation of the separator is not particularly limited, and any (suitable) polymer available for utilization in a binder of an electrode plate may be utilized. For example, the polymer may utilize a vinylidene fluoride/hexafluoropropylene copolymer, polyvinylidene fluoride (PVDF), polyacrylonitrile, polymethyl methacrylate, or any (suitable) mixture thereof.

Next, an electrolyte may be prepared. For more details of the electrolyte, refer to the lithium battery described above.

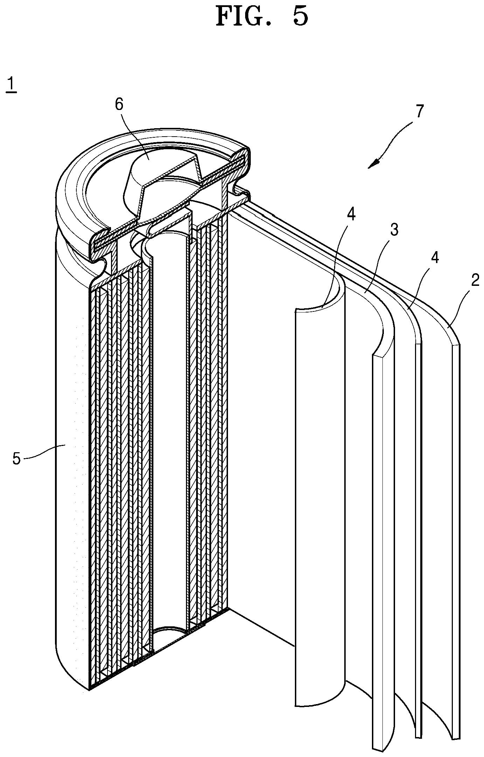

As shown in FIG. 5, a lithium battery 1 includes a cathode 3, an anode 2, and a separator 4. The cathode 3, the anode 2, and the separator 4 may be wound or folded to form a battery structure 7. The formed battery structure 7 may be accommodated in a battery case 5. The battery case 5 may be injected with an organic electrolyte and sealed with a cap assembly 6, thereby completing the preparation of the lithium battery 1. The battery case 5 may have a cylindrical shape, but the present disclosure is not necessarily limited thereto, and the case may have a polygonal shape, a thin-film shape, and/or the like.

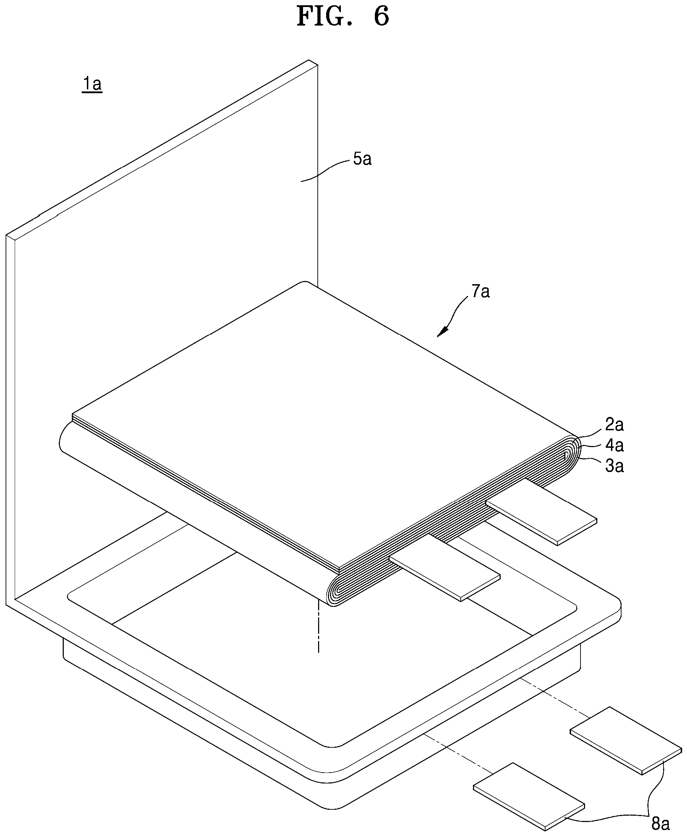

As shown in FIG. 6, a lithium battery 1a includes a cathode 3a, an anode 2a, and a separator 4a. The separator 4a may be disposed between the cathode 3a and the anode 2a, and the cathode 3a, the anode 2a, and the separator 4a may be wound or folded to form a battery structure 7a. The formed battery structure 7a may be accommodated in a battery case 5a. An electrode tab 8a, acting as an electrical path for guiding an electrical current generated in the battery structure 7a to the outside, may be included. The battery case 5a may be injected with an organic electrolyte and sealed to thereby complete the preparation of the lithium battery 1a. The battery case 5a may have a polygonal shape, but the present disclosure is not necessarily limited thereto, and the case may also have a cylindrical shape, a thin-film shape, and/or the like, for example.

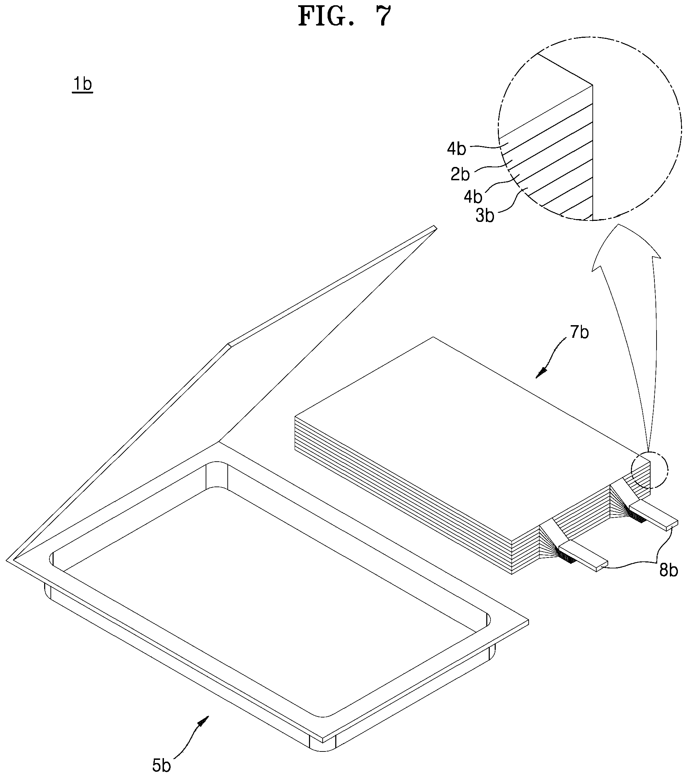

As shown in FIG. 7, a lithium battery 1b includes a cathode 3b, an anode 2b, and a separator 4b. The separator 4b may be disposed between the cathode 3b and the anode 2b to form a battery structure 7b. The battery structure 7b may be stacked in a bi-cell structure and then accommodated into a battery case 5b. An electrode tab 8b, acting as an electrical path for guiding an electrical current generated in the battery structure 7b to the outside, may be included. The battery case 5b may be injected with an organic electrolyte and sealed to thereby complete the preparation of the lithium battery 1b. The battery case 5b may have a polygonal shape, but the present disclosure is not necessarily limited thereto, and the case may also have a cylindrical shape, a thin-film shape, and/or the like, for example.

A pouch-type or kind lithium battery corresponds to the lithium battery shown in FIGs. 5 to 7 utilizing a pouch as a battery case. The pouch-type or kind lithium battery may include one or more battery structures. The battery structure may be formed by disposing a separator between a cathode and an anode. The battery structure may be stacked in a bi-cell structure and impregnated with an organic electrolyte, and then accommodated and sealed in a pouch, thereby completing the preparation of a pouch-type or kind lithium battery. For example, the cathode, anode, and separator described above may be simply stacked in the form of an electrode assembly and then accommodated in a pouch, or may be wound or folded into a jelly roll-type or kind electrode assembly and then accommodated in a pouch. Subsequently, the pouch may be injected with an organic electrolyte and then sealed, thereby completing the preparation of a lithium battery.

The lithium battery, due to having excellent or suitable lifespan characteristics and high-rate capability, may be utilized in an electric vehicle (EV), for example. For example, the lithium battery may be utilized in a hybrid vehicle, such as a plug-in hybrid electric vehicle (PHEV) and/or the like. Also, the lithium battery may be utilized in any field that requires a large amount of energy storage. For example, the lithium battery may be utilized in an electric bicycle, a power tool, and/or the like.

Multiple units of the lithium battery may be stacked together to form a battery module, and multiple units of the battery module may form a battery pack. This battery pack may be utilized in all types (kinds) of devices in which high capacity and high output are required. For example, the battery pack may be utilized in a laptop computer, a smartphone, an electric vehicle, and/or the like. The battery module may include, for example, a plurality of batteries and a frame holding these batteries. The battery pack may include, for example, a plurality of battery modules and a bus bar connecting these battery modules. The battery module and/or the battery pack may further include a cooling device. A plurality of battery packs may be controlled or selected by a battery management system. The battery management system may include a battery pack, and a battery control device connected to the battery pack.

The present disclosure will be described in greater detail through Examples and Comparative Examples. However, it will be understood that the following examples are provided merely to illustrate the present disclosure, and should not be construed as limiting the scope of the present disclosure.

### Preparation of Composite

### Preparation Example 1: Al₂O₃@Gr Composite

Al₂O₃ particles (average particle diameter: about 15 nm) were loaded into a reactor, and with CH₄ being supplied into the reactor at 300 sccm and 1 atm for about 30 minutes, the temperature inside the reactor was elevated to 1,000 °C.

Subsequently, a heat treatment was performed by maintaining the above temperature for 7 hours. Then, the temperature inside the reactor was adjusted to room temperature (20 °C to 25 °C) to obtain a composite in which Al₂O₃ particles and reduction products thereof, Al₂O_{z} (0<z<3) particles, were embedded in graphene.

The content (*e.g*., amount) of alumina included in the composite was 60 wt%.

### Preparation of Composite Cathode Active Material

### Manufacturing Example 1: NCA91 coated with F-containing polymer, 2 wt% F content (e.g., amount) by XPS

LiNi_{0.91}Co_{0.05}Al_{0.04}O₂ (hereinafter referred to as NCA91) having an average particle diameter (D50) of 14 µm, and a fluorine-containing polymer (polyvinylidene fluoride, PVDF) (Solef 6020, Solvay) were milled at about 1,000 rpm to about 2,000 rpm for about 5 hours to about 10 hours utilizing a Henschel mixer to prepare a dry composite cathode active material with NCA91 cores coated with the fluorine-containing polymer. The weight ratio of NCA91 and the fluorine-containing polymer was controlled or selected such that an F content (e.g., amount) of 2 wt% can be obtained from an XPS spectrum of the composite cathode active material surface.

### Manufacturing Example 2: NCA91 coated with F-containing polymer, 4 wt% F content (e.g., amount) by XPS

A dry composite cathode active material was prepared following substantially the same process as in Manufacturing Example 1, except that the weight ratio of NCA91 and the fluorine-containing polymer was adjusted such that an F content (e.g., amount) of 4 wt% can be obtained from an XPS spectrum of the composite cathode active material surface.

### Manufacturing Example 3: NCA91 coated with F-containing inorganic particles, 2 wt% F content (e.g., amount) by XPS

LiNi_{0.91}Co_{0.05}Al_{0.04}O₂ (hereinafter referred to as NCA91) having an average particle diameter (D50) of 14 µm and AlF₃ were milled at a rotation rate of about 1,000 rpm to about 2,000 rpm for about 5 minutes to about 30 minutes to prepare a dry composite cathode active material with NCA91 cores coated with fluorine-containing inorganic particles. The weight ratio of NCA91 and the fluorine-containing inorganic particles was controlled or selected such that an F content (e.g., amount) of 2 wt% can be obtained from an XPS spectrum of the composite cathode active material surface.

### Manufacturing Example 4: NCA91 coated with F-containing inorganic particles, 4 wt% F content (e.g., amount) by XPS

A dry composite cathode active material was prepared following substantially the same process as in Manufacturing Example 3, except that the weight ratio of NCA91 and AlF₃ was adjusted such that an F content (*e.g*., amount) of 4 wt% can be obtained from an XPS spectrum of the composite cathode active material surface.

### Manufacturing Example 5: NCA91 coated with B, 2 wt% B content (e.g., amount) by XPS

Boron (B) was doped on the surface of LiNi_{0.91}Co_{0.05}Al_{0.04}O₂ (hereinafter referred to as NCA91) having an average particle diameter (D50) of 14 µm to prepare a B-doped composite cathode active material. The content (e.g., amount) of B doped was controlled or selected such that a B content (*e.g*., amount) of 2 wt% can be obtained from an XPS spectrum of the composite cathode active material surface. NCA91 and boric acid (H₃BO₃) sufficiently dissolved in an ethanol solvent were mixed at a rotation rate of about 500 rpm to 1,000 rpm for 30 minutes to 60 minutes, utilizing a high-speed mixer (TSI, Korea). The mixed slurry was dried at 110 °C for 1 hour to 2 hours, and then heat-treated in a tube-type or kind electric furnace at 500 °C for 10 hours in an oxygen atmosphere to prepare a dry composite cathode active material with B-coated NCA91 cores.

### Manufacturing Example 6: NCA91 coated with B, 4 wt% B content (e.g., amount) by XPS

A B-doped dry composite cathode active material was prepared following substantially the same process as in Manufacturing Example 5, except that the amount of boron (B) being doped was adjusted such that a B content (*e.g*., amount) of 4 wt% can be obtained from an XPS spectrum of the composite cathode active material surface.

The amount of boron being doped was adjusted by changing the molar ratio of boric acid dissolved in ethanol.

### Manufacturing Example 7: NCA91 coated with 0.4 wt% of Al₂O₃@Gr composite (alumina 0.24 wt%) and F-containing polymer, F content (e.g., amount) 4 wt%

LiNi_{0.91}Co_{0.05}Al_{0.04}O₂ (hereinafter referred to as NCA91) having an average particle diameter (D50) of 14 µm, a fluorine-containing polymer (polyvinylidene fluoride, PVDF) (Solef 6020, Solvay), and the composite prepared in Preparation Example 1 were milled at 1,000 rpm to 2,000 rpm for 5 hours to 10 hours utilizing a Henschel mixer to prepare a dry composite cathode active material having NCA91 cores coated with the carbon-containing composite and the fluorine-containing polymer.

The amount of the fluorine-containing polymer was controlled or selected such that an F content (*e.g*., amount) of 4 wt% can be obtained from an XPS spectrum of the composite cathode active material surface. The amount of the composite prepared in Preparation Example 1 was controlled or selected such that the content (*e.g*., amount) of the composite coated on the composite cathode active material surface can be 0.4 wt%.

### Manufacturing Example 8: NCA91 coated with 0.8 wt% of Al₂O₃@Gr composite (alumina 0.48 wt%) and F-containing polymer, F content (e.g., amount) 4 wt%

A dry composite cathode active material coated with a carbon-containing composite and a fluorine-containing polymer was prepared following substantially the same process as Example 7, except that the amount of the composite prepared in Preparation Example 1 was doubled such that the content (*e.g*., amount) of the composite coated on the surface of the composite cathode active material can be 0.8 wt%.

### Comparative Manufacturing Example 1: Bare NCA91

LiNi_{0.91}Co_{0.05}Al_{0.04}O₂ (hereinafter referred to as NCA91) having an average particle diameter (D50) of 14 µm was utilized as is as a composite cathode active material.

### Reference Manufacturing Example 1: NCA91 coated with F-containing polymer, 6 wt% F content (e.g., amount) by XPS

A dry composite cathode active material was prepared following substantially the same process as in Manufacturing Example 1, except that the weight ratio of NCA91 and the F-containing polymer was adjusted such that an F content (*e.g*., amount) of 6 wt% can be obtained from an XPS spectrum of the composite cathode active material surface.

### Preparation of Cathode and Lithium Battery (Half Cell)

### Example 1: Dry Cathode and Core/Shell Composite Cathode Active Material Preparation of Dry Cathode Film and Dry Cathode

The dry composite cathode active material prepared in Manufacturing Example 1, a dry carbon conductive material, and polytetrafluoroethylene (PTFE) as a dry binder in a weight ratio of 96 : 2 : 2 were introduced into a blade mixer, and a first dry-mixing was performed at 25 °C at a rate of 1,200 rpm for 10 minutes to prepare a first dry mixture in which the dry cathode active material, the dry conductive material, the dry binder are uniformly mixed. The dry carbon conductive material utilized was a mixture containing carbon nanotubes (CNT) and Ketjenblack (ECP) in a weight ratio of 7 : 3. Subsequently, to allow the binder fibrillation process to proceed, the first dry mixture was further subjected to a second mixing at 25 °C at a rate of 4,000 rpm for 25 minutes, utilizing a blade mixer, to prepare a second dry mixture. In the preparation of the first dry mixture and the second dry mixture, no additional solvent was utilized.

The prepared second dry mixture was placed in an extruder and extruded to prepare a dry cathode self-standing film in a sheet form. The pressure during extrusion was 60 MPa. The prepared dry cathode self-standing film was rolled to prepare a rolled dry electrode self-standing film. The pressure during rolling was 3.5 ton/cm². The thickness of the dry cathode film was about 200 µm.

A cathode current collector having a 25 µm-thick aluminium thin film coated with a carbon layer on one side thereof was prepared.

The carbon layer was prepared by coating and drying a composition containing Denka black and polyvinylidene fluoride (PVDF). The thickness of the carbon layer disposed on one side of the cathode current collector was about 1 µm. The carbon layer is an interlayer.

A dry cathode was prepared by placing the rolled dry cathode film on one side of the cathode current collector. The dry cathode has the cathode current collector/interlayer/dry cathode active material layer structure.

### Preparation of Coin Cells

A coin cell was prepared utilizing the cathode prepared above, and utilizing lithium metal as a counter electrode, a PTFE separator, and a solution containing 1.3 M LiPF₆ dissolved in ethylene carbonate (EC) + ethyl methyl carbonate (EMC) + dimethyl carbonate (DMC) (3 : 4 : 3 volume ratio) as an electrolyte.

### Examples 2 to 8: Dry Cathode

A dry electrode film, a dry cathode, and a coin cell were prepared following substantially the same process as in Example 1, except that the dry composite cathode active materials prepared in Manufacturing Examples 2 to 8 were utilized respectively instead of the dry composite cathode active material prepared in Manufacturing Example 1.

### Comparative Example 1: Dry Cathode, Bare NCA91 Cathode Active Material

A dry cathode film, a dry cathode, and a coin cell were prepared following substantially the same process as in Example 1, except that the LiNi_{0.91}Co_{0.05}Al_{0.04}O₂ (hereinafter referred to as NCA91) prepared in Comparative Manufacturing Example 1 was utilized instead of the dry composite cathode active material prepared in Manufacturing Example 1.

### Reference Example 1: Dry Cathode, F-containing polymer-coated NCA91 Cathode Active Material, 6 wt% F content (e.g., amount) by XPS

A dry cathode film, a dry cathode, and a coin cell were prepared following substantially the same process as in Example 1, except that the dry composite cathode active material prepared in Reference Manufacturing Example 1 was utilized instead of the dry composite cathode active material prepared in Manufacturing Example 1.

### Comparative Example 2: Wet Cathode, Bare NCA91 Cathode Active Material

A coin cell was prepared following substantially the same process as in Comparative Example 1, except that instead of the dry cathode, a wet cathode was prepared and utilized.

### Preparation of Wet Cathode

A mixture containing LiNi_{0.91}Co_{0.05}Al_{0.04}O₂ (hereinafter, referred to as NCA91) having an average particle diameter (D50) of 14 µm, a carbon conductive agent, and polyvinylidene fluoride (PVDF) in a weight ratio of 96 : 2 : 2 was mixed with N-methyl pyrrolidone (NMP) in an agate mortar to produce a cathode active material slurry. The carbon conductive material utilized was a mixture containing carbon nanotubes (CNT) and Ketjenblack (ECP) in a weight ratio of 7:3.

The cathode active material slurry was bar-coated on one side of 30 µm-thick cathode current collector prepared, and dried at room temperature and dried again under vacuum at 120 °C, to prepare a laminate.

The prepared laminate was rolled to prepare a cathode having a cathode active material layer disposed on the cathode current collector. The pressure during rolling was 3.5 ton/cm². The thickness of the cathode active material layer was about 200 µm.

### Preparation of Coin Cells

Coin cells were prepared following substantially the same process as Example 1, except that the cathode prepared above was utilized.

### Comparative Example 3: Wet Cathode, F-containing polymer-coated NCA91 Cathode Active Material, 2 wt% F content (e.g., amount) by XPS

A wet cathode and a coin cell were prepared following substantially the same process as Comparative Example 2, except that the composite cathode active material prepared in Manufacturing Example 1 was utilized instead of the bare NCA91 cathode active material.

### Evaluation Example 1: Surface Composition Evaluation by XPS Spectrum

Using a Quantum 2000 (Physical Electronics), XPS spectra of the composite cathode active materials included in the dry cathodes prepared in Examples 1 to 8, Comparative Example 1, and Reference Example 2 were obtained. From the XPS spectra obtained, the content (e.g., amount) of element F or B present on the surface of composite cathode active material was calculated, and a part of the results thereof is shown in Table 1.

**Table 1**

| [wt%] | F 1s | B 2p |
|---|---|---|
| Manufacturing Example 1 | 2 | - |
| Manufacturing Example 2 | 4 | - |
| Manufacturing Example 3 | Less than 2 | - |
| Manufacturing Example 4 | Less than 4 | - |
| Manufacturing Example 5 | Less than 1 | 2 |
| Manufacturing Example 6 | Less than 1 | 4 |
| Manufacturing Example 7 | 4 | - |
| Manufacturing Example 8 | 4 | - |
| Comparative Manufacturing Example 1 | Less than 1 | - |
| Reference Manufacturing Example 1 | 6 | - |

As shown in Table 1, it was confirmed that the shells of the composite cathode active materials of Manufacturing Examples 1 to 8 and Reference Manufacturing Example 1 contain element F or element B in about 2 wt% or more. It was found that the shell of the composite cathode active material of Comparative Manufacturing Example 1 contains element F in less than 1 wt%. Although the content of element F in Manufacturing Examples 3 and 4 is disclosed as "less than 2wt%" and "less than 4wt%" in Table 1, the content of element F in Manufacturing Examples 3 and 4 is substantially close to 2wt% and 4wt%, i.e., approximately 2wt% and 4wt% respectively.

### Evaluation Example 2: Scanning electron microscopy (SEM) and SEM- energy-dispersive X-ray spectroscopy (EDS) analyses

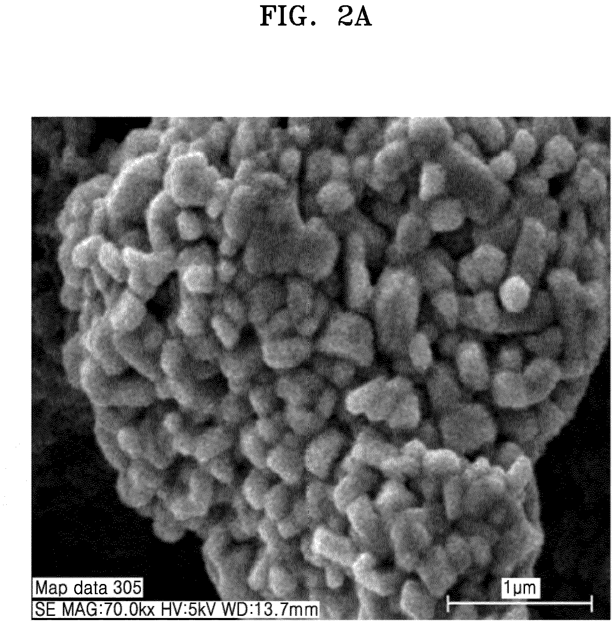

SEM and EDS analyses were performed on the composite cathode active materials included in the dry cathodes prepared in Example 1 and Comparative Example 1, and the result thereof is shown in FIGs. 2A to 3B.

For SEM-EDS analysis, an FEI Titan 80-300 of Philips Corporation was utilized.

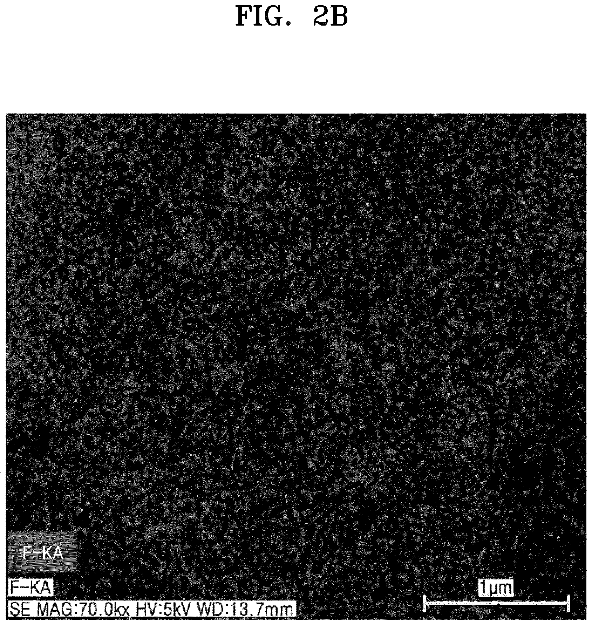

FIGs. 2A and 2B show an SEM image and the result of EDS analysis of F of the surface of the composite cathode active material included in the dry cathode prepared in Example 1.

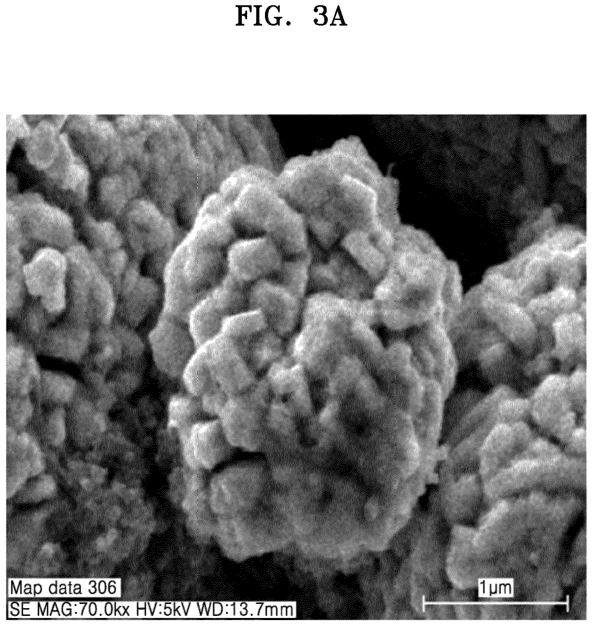

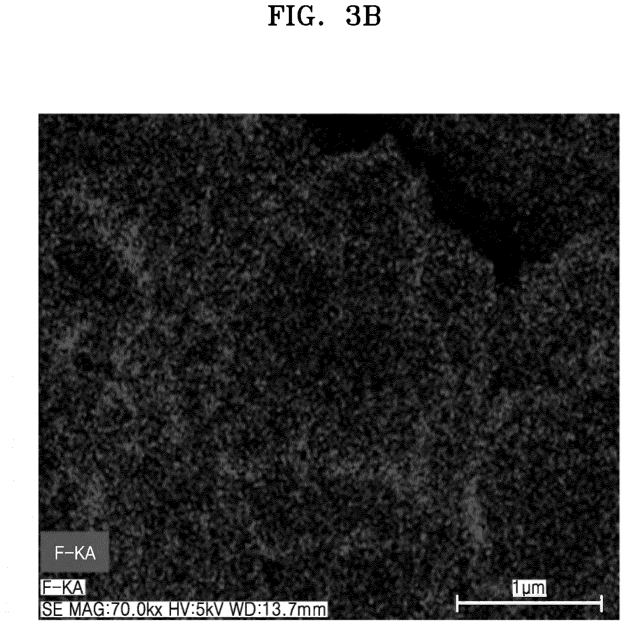

FIGs. 3A and 3B show an SEM image and the result of EDS analysis of F of the surface of the composite cathode active material included in the dry cathode prepared in Comparative Example 1.

As shown in the result of XPS analysis of Evaluation Example 1, the F content (e.g., amount) of the surface of composite cathode active material included in the dry cathode of Example 1 was 2 wt% or more, whereas the F content (e.g., amount) of the surface of composite cathode active material included in the dry cathode of Comparative Example 1 was less than 1 wt%.

FIG. 2B shows an increased color intensity, compared to FIG. 3B.

### Evaluation Example 3: XPS Spectrum Evaluation

In the preparation process of the composite prepared in Preparation Example 1, XPS spectra were measured utilizing a Quantum 2000 (Physical Electronics) over time. XPS spectra of the C 1s orbital and Al 2p orbital of each sample before temperature elevation, and at 1 minute, 5 minutes, 30 minutes, 1 hour, and 4 hours after temperature elevation were obtained. At the beginning of temperature elevation, the XPS spectrum only shows the Al 2p peaks but does not show C 1s peaks. After 30 minutes, the C 1s peaks appeared clearly, and the size of the Al 2p peak was significantly reduced.

After 30 minutes, C 1s peaks attributable to C-C bonds and C=C bonds due to graphene growth appeared clearly around 284.5 eV.

As the oxidation number of aluminium decreases as the reaction time increases, the peak position of the Al 2p orbital was shifted toward a lower binding energy (eV).

Therefore, it was found that as the reaction progressed, graphene grown on Al₂O₃ particles and Al₂Oₓ(0<x<3), which are reduction products of Al₂O₃, was produced.

The average contents (*e.g*., amounts) of carbon and aluminium were measured through XPS analysis results in 10 regions of the composite sample prepared in Preparation Example 1. With respect to the measurement results, a deviation of the aluminium content (*e.g*., amount) for each region was calculated. The deviation of the aluminium content (*e.g*., amount) was expressed as a percentage of the average value, and this percentage was referred to as uniformity. The percentage of the average value of the deviation of the aluminium content (*e.g*., amount), for example, the uniformity of the aluminium content (*e.g*., amount), was 1%. Therefore, it was found that alumina was uniformly distributed in the composite prepared in Preparation Example 1.

### Evaluation Example 4: SEM, HR-TEM and SEM-EDS Analyses

The composite prepared in Preparation Example 1, the composite cathode active material prepared in Manufacturing Example 7, and the bare NCA91 prepared in Comparative Manufacturing Example 1 were subjected to scanning electron microscope analysis, high-resolution transmission electron microscope analysis, and energy-dispersive X-ray spectroscopy (EDS) analysis.

For SEM- EDS analysis, an FEI Titan 80-300 of Philips Corporation was utilized.

The composite prepared in Preparation Example 1 shows a structure in which Al₂O₃ particles and Al₂O_{z} (0<z<3) particles as a reduction product thereof are embedded in graphene. It was found that a graphene layer was disposed on the outside of at least one of Al₂O₃ particles and/or Al₂O_{z} (0<z<3) particles. The at least one of Al₂O₃ particles and/or Al₂O_{z} (0<z<3) particles were uniformly distributed within the graphene matrix. The at least one of Al₂O₃ particles and/or Al₂O_{z} (0<z<3) particles were found to have a particle diameter of about 20 nm. The particle diameter of the composite prepared in Preparation Example 1 was about 50 nm to 200 nm.

The SEM-EDS mapping analysis of the bare NCA91 of Comparative Manufacturing Example 1 and the core/shell structure prepared in Manufacturing Example 7 showed that the concentration of aluminium (Al) distributed was higher on the surface of the 1^{st} core/shell structure of Manufacturing Example 7 than on the surface of the bare NCA91 of Comparative Manufacturing Example 1. It was confirmed that in the 1^{st} core/shell structure of Manufacturing Example 7, the composite prepared in Preparation Example 1 was coated on the NCA91 cores to form a shell.

### Evaluation Example 5: Evaluation of Vertical Binding Force of Cathode Active Material Layer (I)

Using a SAICAS (SAICAS EN-EX, Daipla Wintes, JAPAN), binding characteristics of the cathode active material layers of the dry cathode of Example 1 and wet cathode prepared in Comparative Example 3 were analyzed.

With a 1 mm-wide diamond blade, a constant speed analysis was performed to measure a vertical binding force (Fv) according to depth (clearance angle = 10°; rake angle = 20°; shear angle = 45°; horizontal velocity = 4 µm/s; and vertical velocity = 0.4 µm/s).

First, a first constant speed analysis was performed from a first point on the surface of the composite cathode active material to the surface of the cathode current collector, and the cathode active material layer was removed by moving the blade horizontally along the surface of the cathode current collector. Then, at a position moved back by 10 µm from the first point, a second constant-speed analysis was performed under the same conditions as the first constant-speed analysis. The data obtained from the second constant-speed analysis were utilized.

In the cathode active material layer, a vertical binding force of the cathode active material layer was measured, and the measurement data was normalized to binding force graph areas to derive a vertical relative binding force (F_{VR}) according to depth of the cathode active material layer.

The data measured from a section between a first point, which is 5% away from the surface of cathode active material layer, and a second point, which is 5% away from the surface of the electrode current collector with respect to the total thickness of the cathode active material layer, were utilized for the vertical binding force of the cathode active material layer. Data near the surface of cathode active material layer and the surface of electrode current collector were excluded in order to avoid measurement errors.

Using Equation 1, a change in vertical binding force (F_{VR}) was calculated from the derived vertical relative binding force (F_{VR}) data of the cathode active material layer. Further, arithmetic mean values were calculated from the derived vertical relative binding force (F_{VR}) data of the cathode active material layer. Change in Vertical Relative Binding force (FVR) = [(Maximum Vertical Relative Binding Force - Minimum Vertical Relative Binding Force) / Minimum Vertical Relative Binding force] × 100

The result of measurement shows that the change in vertical relative binding force of the cathode active material layer included in the dry cathode of Example 1 was 200% or less.

Thus, it was found that the cathode active material layer (for example, the dry electrode film) of Example 1 has substantially uniform binding force and composition distributions regardless of the position in a thickness direction of the cathode active material layer.

It was found that the change in vertical relative binding force of the cathode active material layer included in the wet cathode of Comparative Example 3 was more than 400%.

Thus, it was found that the cathode active material layer of Comparative Example 3 has a binding force and composition distribution that significantly vary depending on the position in a thickness direction of the cathode active material layer.

### Evaluation Example 6: Evaluation of Horizontal Binding Force of Cathode Active Material Layer (II)

Using SAICAS (SAICAS EN-EX, Daipla Wintes, JAPAN), binding characteristics of the cathode active material layers of the dry cathode prepared in Example 1 and the wet cathode prepared in Comparative Example 3 were analyzed.

With a 1 mm-wide diamond blade, constant speed analysis was performed to measure a horizontal binding force (F_{H}) according to depth (clearance angle = 10°; rake angle = 20°; shear angle = 45°; horizontal velocity = 4 µm/s; and vertical velocity = 0.4 µm/s).

First, a first constant speed analysis was performed from a first point on the surface of the composite cathode active material to the surface of the cathode current collector, and the cathode active material layer was removed by moving the blade horizontally along the surface of the cathode current collector. Then, at a position moved back by 10 µm from the first point, a second constant-speed analysis was performed under the same conditions as the first constant-speed analysis. The data obtained from the second constant-speed analysis were utilized.

The first horizontal binding force (F_{H1}) was measured at a first point, which is 10% away from the surface of the cathode active material layer, and the second horizontal binding force (F_{H2}) was measured at a second point, which is 10% away from the surface of the cathode current collector, wherein the first and second point positions are given with respect to the total thickness of the cathode active material layer.

A horizontal binding force ratio between the first point and the second point is defined by Equation 2. Horizontal Binding Force Ratio Between First Point and Second Point (%) = [FH2/FH1] × 100

The result of measurement shows that the horizontal binding force ratio of the cathode active material layer of Example 1 was 60% or more.

It was found that the horizontal binding force ratio of the cathode active material layer of Comparative Example 3 was less than 50%.

In one or more embodiments, the horizontal binding force ratio of the cathode active material layer of Example 1 was higher than that of the cathode active material layer of Comparative Example 3.

Accordingly, it was found that the cathode active material layer (for example, the dry electrode film) of Example 1 shows more substantially uniform binding force and composition distribution, compared to the cathode active material layer of Comparative Example 3.

### Evaluation Example 7: Evaluation of High-Temperature (45 °C) Cycling Performance

The lithium batteries prepared in Examples 1 to 2, Reference Example 1 and Comparative Examples 1 to 3 were each charged at a constant current of 0.1 C (e.g., C rate) at 25 °C until the battery voltage reached 4.3 V (vs. Li) and then, the charging was cut-off at a current of 0.05 C while maintaining 4.3 V in a constant voltage mode. Subsequently, the battery was discharged at a constant current rate of 0.1 C until the battery voltage reached 2.8 V (vs. Li) during discharge (formation cycle).

The lithium batteries after the formation cycle were each charged at a constant current of 0.5 C at 25 °C until the battery voltage reached 4.3 V (vs. Li) and then, the charging was cut-off at a current of 0.05 C while maintaining 4.3 V in a constant voltage mode. Subsequently, the battery was discharged at a constant current of 0.5 C until the battery voltage reached 2.8 V during discharge (1^{st} cycle). This cycle was repeated under the same conditions up to the 300th cycle.

Throughout the charge-discharge cycles above, a rest period of 10 minutes was provided after each charge/discharge cycle. A part of the high-temperature cycling test results is shown in Table 2. Capacity retention ratio is defined by Equation 3. Capacity Retention Ratio [%] = [Discharge Capacity in 300th cycle / Discharge Capacity in 1st cycle] × 100

**Table 2**

| | Capacity Retention Ratio [%] |
|---|---|
| Example 1 (2 wt% F-coated Dry Cathode) | 80.2 |
| Example 2 (4 wt% F-coated Dry Cathode) | 77.4 |
| Reference Example 1 (6 wt% F-coated Dry Cathode) | 76.9 |
| Comparative Example 1 (Bare NCA91 Dry Cathode) | 57.8 |

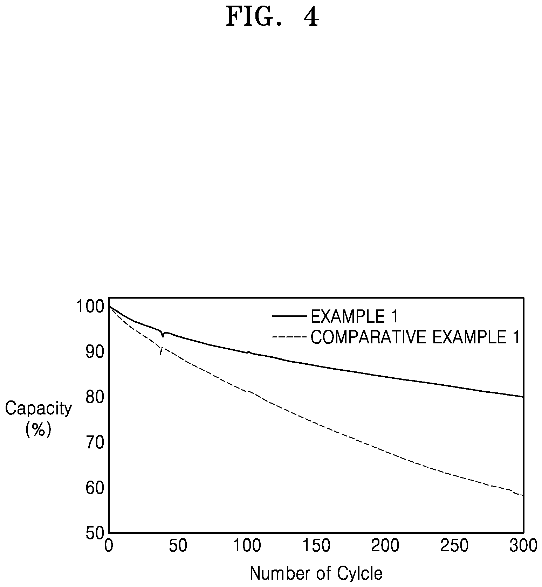

As shown in Table 2 and FIG. 4, the lithium batteries provided with the F-coated dry cathode including the composite cathode active materials of Examples 1 and 2 exhibit a significant increase of 20% or more in capacity retention ratio, relative to the lithium battery provided with the dry cathode including the F-uncoated composite cathode active material of Comparative Example 1.

The lithium battery provided with the dry cathode including the 6 wt% F-coated composite cathode active material of Reference Example 1 shows decreased battery capacity and decreased high-temperature stability and thus shows an increase in direct current internal resistance (DCIR) after high-temperature exposure.

In addition, the wet cathodes including the 2 wt% F-coated composite cathode active material of Comparative Example 3 had a lifespan increase of less than 5%, compared to the lithium battery including the F-uncoated composite cathode active material of Comparative Example 2. Therefore, it was confirmed that coating the surface of composite cathode active material with an element of Period 2 of the Periodic Table of the Elements in the dry electrode leads to a significantly increased lifespan of the lithium battery including the dry electrode, relative to the lithium battery including the wet electrode.

According to aspects of one or more embodiments of the present disclosure, as a dry electrode film has decreased internal resistance and improved mechanical strength, a lithium battery employing the dry electrode film may have improved cycling performance.

As used herein, the terms "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

Further, the use of "may" when describing embodiments of the present disclosure refers to "one or more embodiments of the present disclosure."

The portable device, vehicle, and/or the battery, e.g., a battery controller, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

It should be understood that embodiments described herein should be considered in a descriptive sense only and not for purposes of limitation. Descriptions of features or aspects within each embodiment should typically be considered as available for other similar features or aspects in other embodiments. Although the embodiments of the present disclosure have been described, it is understood that the present disclosure should not be limited to these embodiments, but one or more suitable changes and modifications can be made by one ordinary skilled in the art within the scope of the present disclosure as defined by the following claims and equivalents thereof.

## Claims

1. A dry electrode film comprising:
a dry electrode active material; and
a dry binder,
wherein the dry electrode active material comprises:
a core; and
a shell conforming to a surface of the core,
wherein the shell comprises at least one element selected from among beryllium (Be), boron (B), and fluorine (F), and
in an X-ray photoelectron spectroscopy (XPS) spectrum of a surface of the dry electrode active material, an amount of the at least one element is about 1 wt% to about 4 wt%.

2. The dry electrode film as claimed in claim 1, wherein the shell comprises a coating layer, the coating layer comprising Be, B, F, or any combination thereof.

3. The dry electrode film as claimed in claim 2,
wherein the coating layer comprises a polymer, the polymer comprising Be, B, F, or any combination thereof, or
the coating layer comprises an inorganic compound, the inorganic compound comprising Be, B, F, or any combination thereof, optionally
wherein:
the coating layer comprises the inorganic compound,
the inorganic compound comprises a lithium-containing inorganic compound, a lithium-free inorganic compound, or any combination thereof,
the lithium-containing inorganic compound comprises LiF, Li₂B₄O₇, Li₂B₂O₇, Li₂B₈O₁₃, or any combination thereof, and
the lithium-free inorganic compound comprises B₂O₃, B(OH)₃, BF₃, BeF₂, BeO, Be(OH)₂, CsF, KF, NaF, RbF, TiF, AgF, AgF₂, BaF₂, CaF₂, CuF₂, FeF₂, MnF₂, NiF₂, SnF₂, SrF₂, ZnF₂, AlF₃, BiF₃, CeF₃, CrF₃, DyF₃, EuF₃, GaF₃, GdF₃, FeF₃, HoF₃, InF₃, LaF₃, LuF₃, MnF₃, NdF₃, VOF₃, PrF₃, SbF₃, ScF₃, SmF₃, TbF₃, TiF₃, TmF₃, YF₃, YbF₃, TlF₃, CeF₄, GeF₄, SiF₄, SnF₄, TiF₄, VF₄, ZrF₄, NbF₅, SbFs, TaF₅, BiFs, MoF₆, ReF₆, SF₆, WF₆, or any combination thereof.

4. The dry electrode film as claimed in claim 1,
wherein the shell comprises a doping layer, the doping layer comprising Be, B, F, or any combination thereof.

5. The dry electrode film as claimed in any one of claims 1 to 4,
wherein the shell further comprises at least one element selected from among carbon (C) and nitrogen (N).

6. The dry electrode film as claimed in any one of claims 1 to 5,
wherein
the shell further comprises a first carbon-based material,
the first carbon-based material comprises graphene, graphene oxide, reduced graphene oxide, or any combination thereof, and
the first carbon-based material further comprises Be, B, F, or any combination thereof.

7. The dry electrode film as claimed in any one of claims 1 to 5,
wherein the shell further comprises:
at least one first metal oxide; and
a first carbon-based material, and
wherein
the at least one first metal oxide is in a matrix of the first carbon-based material and is represented by formula MₐO_{b} (0<a≤3 and 0<b<4, and when a is 1, 2, or 3, b is not an integer), and M is at least one metal selected from among Groups 2 to 16 of the Periodic Table of the Elements.

8. The dry electrode film as claimed in claim 7,
wherein
a metal included in the at least one first metal oxide is at least one metal selected from among aluminium (Al), niobium (Nb), magnesium (Mg), scandium (Sc), titanium (Ti), zirconium (Zr), vanadium (V), tungsten (W), manganese (Mn), iron (Fe), cobalt (Co), palladium (Pd), copper (Cu), silver (Ag), zinc (Zn), antimony (Sb), and selenium (Se), and
the at least one first metal oxide is at least one selected from among Al₂O_{z} (0<z<3), NbOₓ (0<x<2.5), MgOₓ (0<x<1), Sc₂O_{z} (0<z<3), TiO_{y} (0<y<2), ZrO_{y} (0<y<2), V₂O_{z} (0<z<3), WO_{y} (0<y<2), MnO_{y} (0<y<2), Fe₂O_{z} (0<z<3), Co₃O_{w} (0<w<4), PdOₓ (0<x<1), CuOₓ (0<x<1), AgOₓ (0<x<1), ZnOₓ (0<x<1), Sb₂O_{z} (0<z<3), and SeO_{y} (0<y<2).

9. The dry electrode film as claimed in claim 8,
wherein the shell further comprises a second metal oxide, and
wherein
the second metal oxide is represented by formula MₐO_{c} (0<a≤3 and 0<c≤4, and when a is 1, 2, or 3, c is an integer),
the second metal oxide comprises a same metal as the at least one first metal oxide,
a ratio (c/a) of c to a in the second metal oxide has a greater value than a ratio (b/a) of b to a in the at least one first metal oxide, and
the second metal oxide is in a matrix of the first carbon-based material, optionally
wherein
the second metal oxide is selected from among Al₂O₃, NbO, NbO₂, Nb₂O₅, MgO, Sc₂O₃, TiO₂, ZrO₂, V₂O₃, WO₂, MnO₂, Fe₂O₃, Co₃O₄, PdO, CuO, AgO, ZnO, Sb₂O₃, and SeO₂, and
the at least one first metal oxide is a reduction product of the second metal oxide.

10. The dry electrode film as claimed in any one of claims 1 to 9, wherein:
(i) the shell has a thickness of about 0.1 nm to about 5 µm and has a monolayer structure or a multilayer structure,
the shell is a dry-coating layer, and an amount of the shell is 5 wt% or less with respect to a total weight of the dry electrode active material; and/or
(ii) the core comprises a lithium transition metal oxide, and
the lithium transition metal oxide is represented by a formula selected from among Formulas 1 to 8:
Formula 1 LiₐNiₓCo_{y}M_{z}O_{2-b}A_{b}
wherein in Formula 1, 1.0≤a≤1.2, 0≤b≤0.2, 0.8≤x<1, 0≤y≤0.2, 0<z≤0.2, x+y+z=1,
M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), B, or any combination thereof, and
A is F, sulfur (S), chlorine (CI), bromine (Br), or any combination thereof,
Formula 2 LiNiₓCo_{y}Mn_{z}O₂
Formula 3 LiNiₓCo_{y}Al_{z}O₂
wherein in Formulas 2 and 3, 0.8≤x≤0.95, 0≤y≤0.2, 0<z≤0.2, and x+y+z=1,
Formula 4 LiNiₓCo_{y}Mn_{z}Al_{w}O₂
wherein in Formula 4, 0.8≤x≤0.95, 0≤y≤0.2, 0<z≤0.2, 0<w≤0.2, and x+y+z+w=1,
Formula 5 LiₐCOₓM_{y}O_{2-b}A_{b}
wherein in Formula 5,
1.0≤a≤1.2, 0≤b≤0.2, 0.9≤x≤1, 0≤y≤0.1, x+y=1,
M is Mn, Nb, V, Mg, Ga, Si, W, Mo, Fe, Cr, Cu, Zn, Ti, Al, B, or any combination thereof, and
A is F, S, Cl, Br, or any combination thereof,
Formula 6 LiₐNiₓMn_{y}M'_{z}O_{2-b}A_{b}
wherein, in Formula 6,
1.0≤a≤1.2, 0≤b≤0.2, 0<x≤0.3, 0.5≤y<1, 0<z≤0.3, x+y+z=1,
M' is cobalt (Co), Nb, V, Mg, Ga, Si, W, Mo, Fe, Cr, Cu, Zn, Ti, Al, B, or any combination thereof, and
A is F, S, Cl, Br, or any combination thereof,
Formula 7 LiₐM1ₓM2_{y}PO_{4-b}X_{b}
wherein in Formula 7, 0.90≤a≤1.1, 0≤x≤0.9, 0≤y≤0.5, 0.9<x+y<1.1, 0≤b≤2,
M1 is Cr, Mn, Fe, Co, nickel (Ni), copper (Cu), zirconium (Zr), or any combination thereof,
M2 is Mg, calcium (Ca), strontium (Sr), barium (Ba), Ti, Zn, B, Nb, Ga, indium (In), Mo, W, Al, Si, Cr, V, scandium (Sc), yttrium (Y), or any combination thereof, and
X is O, F, S, P, or any combination thereof.
Formula 8 LiₐM3_{z}PO₄
wherein in Formula 8, 0.90≤a≤1.1 0.9≤z≤1.1, and
M3 is Cr, Mn, Fe, Co, Ni, Cu, Zr, or any combination thereof.

11. The dry electrode film as claimed in any one of claims 1 to 10, wherein
the dry binder comprises a fibrillized binder,
the dry binder comprises a fluorinated binder,
the dry binder has a glass transition temperature (T_{g}) of about -15 °C to about 150 °C, and
an amount of the dry binder is about 0.1 wt% to about 5 wt% with respect to a total weight of the dry electrode film.

12. The dry electrode film as claimed in any one of claims 1 to 11, wherein:
(i) the dry electrode film further comprises a dry conductive material,
the dry conductive material comprises a carbon-based conductive material,
the carbon-based conductive material comprises a fibrous carbon-based material having an aspect ratio of 10 or more, a particulate carbon-based material having an aspect ratio of less than 10, or any combination thereof, and
an amount of the dry conductive material is about 0.1 wt% to about 5 wt% with respect to a total weight of the dry electrode film; and/or
(ii) the dry electrode film is free of a residual processing solvent, and
the dry electrode film has a tensile strength of about 500 kPa to about 5,000 kPa.

13. A dry electrode comprising:
an electrode current collector; and
the dry electrode film of any one of claims 1 to 12, on one side or opposite sides of the electrode current collector.

14. The dry electrode as claimed in claim 13,
wherein:
(i) the electrode current collector comprises a substrate and an interlayer between the substrate and the dry electrode film, and
the interlayer comprises a carbon-based conductive material; and/or
(ii) the electrode current collector comprises a base film and a metal layer on one side or opposite sides of the base film,
the base film comprises a polymer, the polymer comprising polyethylene terephthalate (PET), polyethylene (PE), polypropylene (PP), polybutylene terephthalate (PBT), polyimide (PI), or any combination thereof, and
the metal layer comprises indium (In), copper (Cu), magnesium (Mg), titanium (Ti), iron (Fe), cobalt (Co), nickel (Ni), zinc (Zn), aluminium (Al), germanium (Ge), lithium (Li), or an alloy thereof.

15. A lithium battery comprising:
a first electrode;
a second electrode; and
an electrolyte between the first electrode and the second electrode,
wherein
the first electrode, the second electrode, or any combination thereof is the dry electrode as claimed in claim 13 or claim 14, and
the electrolyte comprises a liquid electrolyte, a solid electrolyte, or any combination thereof.
